# EUROPÄISCHE PATENTSCHRIFT

(11) **EP 3 600 982 B1**
(45) Veröffentlichungstag und Bekanntmachung des Hinweises auf die Patenterteilung: **27.04.2022**
(21) Anmeldenummer: 18716542.8
(22) Anmeldetag: 26.03.2018
(51) Int. Cl.: B60T 7/20, B60T 13/08, B60D 1/24, B60D 1/62, B60D 1/167, B60D 1/06

(54) **ERFASSUNGSEINRICHTUNG, ERFASSUNGSVERFAHREN UND STABILISIERUNGSEINRICHTUNG**
DETECTION DEVICE, DETECTION METHOD AND STABILISATION DEVICE
DISPOSITIF DE DÉTECTION, PROCÉDÉ DE DÉTECTION ET DISPOSITIF DE STABILISATION

(30) Priorität: 28.03.2017 DE 202017101795 U
(43) Veröffentlichungstag der Anmeldung: 05.02.2020
(73) Patentinhaber: AL-KO Technology Austria GmbH, 6284 Ramsau im Zillertal (AT)
(72) Erfinder: ECKLE, Volker, 89183 Holzkirch (DE); CZESCHNER, Daniel Andre, 87727 Babenhausen (DE)
(74) Vertreter: ERNICKE Patent- und Rechtsanwälte PartmbB
(86) Internationale Anmeldenummer: PCT/EP2018/057585
(87) Internationale Veröffentlichungsnummer: WO 2018/177975

(56) Entgegenhaltungen:
- WO-A1-93/18375
- DE-A1-102016 116 297
- DE-U1-202015 106 595
- DE-U1-202016 104 073

## Beschreibung

Die Erfindung betrifft eine Erfassungseinrichtung und ein Erfassungsverfahren für die Masse eines Fahrzeuganhängers sowie eine Stabilisierungseinrichtung, insbesondere eine Schlingerbremseinrichtung, für einen Fahrzeuganhänger.

Die DE 20 2015 106 595 U1 offenbart ein Stabilisierungssystem für einen Fahrzeuganhänger mit einem oder mehrere Sensoren zur Erfassung der momentanen Masse und/oder Beladung des Fahrzeuganhängers. An der Zugdeichsel oder der Anhängekupplung ist ein Gewichtssensor angeordnet, der die Auflagekraft in vertikaler Richtung zwischen dem Anhängerchassis und dem Zugfahrzeug erfasst. Alternativ oder zusätzlich kann an der Zugdeichsel oder der Anhängekupplung ein Kraftsensor angeordnet sein, der zur Erfassung von Kontaktkräften zwischen dem Zugfahrzeug und dem Fahrzeuganhänger in horizontaler Richtung dient.

Die DE 20 2016 104 073 U1 lehrt ein Anhängerstabilisierungssystem, welches eine Geschwindigkeitseinrichtung mit Radar und eine Achslastmesseinrichtung zur Messung der Achslast des Fahrzeuganhängers aufweist.

Eine Schlingerbremseinrichtung ist aus der EP 1 598 249 A1 und aus der Praxis bekannt. Die Schlingerbremseinrichtung weist eine Sensorik zur Erfassung von Schlingererscheinungen, eine Steuerung und einen hiervon beaufschlagten Bremsaktuator zur Stabilisierung des erfassten kritischen Fahrzustands auf. Die Stabilisierungswirkung kann von der Fahrzeuglast abhängig sein.

Es ist Aufgabe der vorliegenden Erfindung, eine verbesserte Massenerfassungs- und Stabilisierungstechnik aufzuzeigen.

Die Erfindung löst diese Aufgabe mit den Merkmalen der unabhängigen Ansprüche.

Die beanspruchte Massenerfassung- und Stabilisierungstechnik haben verschiedene Vorteile.

Mit der Erfassungseinrichtung kann die aktuelle Masse bzw. das Gewicht des Fahrzeuganhängers ermittelt werden. Aus der jeweils in Längsrichtung gemessenen Zugkraft und Beschleunigung kann die Masse des Fahrzeuganhängers berechnet werden. Die Messung kann beim Anziehen der Auflaufeinrichtung erfolgen, z.B. beim Anfahren aus dem Stand und/oder in Beschleunigungshasen während der Fahrt. Dabei können die in Zugrichtung entstehenden und gemessenen Zugkraft und Beschleunigung in einer Verarbeitungseinrichtung ausgewertet werden. Der Fahrzeuganhänger kann dabei z.B. von einem angekuppelten Zugfahrzeugs gezogen werden. Im Rechenergebnis können zusätzlich erfasste und evtl. variierende Zusatzparameter für die aktuellen Umgebungsbedingungen einfließen.

Die beanspruchte Erfassungstechnik, d.h. die Erfassungseinrichtung und das Erfassungsverfahren, kommen mit einem geringen Bauaufwand aus und benötigen wenig Platz. Die Erfassungseinrichtung ist eine technisch und wirtschaftlich selbstständige Einheit. Sie kann bei der Erstausrüstung eines Fahrzeuganhängers eingebaut werden. Sie kann auch an einem bestehenden Anhänger nachgerüstet oder umgerüstet werden. Für die Erfassungseinrichtung können auch evtl. bereits vorhandene Komponenten, z.B. ein Beschleunigungssensor, eine Steuerung oder dgl. benutzt werden.

Die beanspruchte Erfassungseinrichtung weist eine Sensorik zur Messung der am Fahrzeuganhänger in Längsrichtung wirkenden Zugkraft (F) und eine Sensorik zur Erfassung der am Fahrzeuganhänger in Längsrichtung wirkenden Beschleunigung sowie eine Verarbeitungseinrichtung auf, die zur Anordnung am Fahrzeuganhänger vorgesehen und ausgebildet sind. Die kraftmessende Sensorik ist zur Anordnung an der Auflaufeinrichtung vorgesehen und ausgebildet und weist einen Messring mit einem oder mehreren Sensoren auf, der zur Anordnung auf einer Zugstange der Auflaufeinrichtung vorgesehen und ausgebildet ist.

Die Sensorik zur Messung der Zugkraft kann am rückwärtigen Ende der Zugstange der Auflaufeinrichtung angeordnet werden und ist hierfür entsprechend ausgebildet. Sie kann dabei zwischen einem rückwärtigen Anschlag an der Zugstange und einem fahrzeugfesten Gegenanschlag, insbesondere einer Lagerung für die Zugstange, eingebaut werden. In Längsrichtung bzw. Axialrichtung baut die Sensorik sehr klein. Sie kommt mit einem Messring und ggf. ein oder mehreren Anlaufringscheiben aus. Der Messring und ggf. vorhandenen Anlaufscheiben können auf der Zugstange angeordnet werden und haben einen angepassten Durchmesser.

Der mit einer oder mehreren lokalen und axialen Vorsprüngen, z.B. brückenartig verformten Wölbungen oder angesetzten oder angeformten Buckeln, versehene Messring ist besonders günstig für eine sensible und genaue Erfassung der Axialkräfte an der Zugstange, insbesondere der an der Zugstange über die Anhängerkupplung eingeleiteten Zugkraft. Der profilierte Messring braucht auch nur wenig Platz. Die anderen Komponenten der Auflaufeinrichtung und der damit verbundenen Bremseinrichtung werden nicht oder wenig beeinträchtigt. Die Bremseinrichtung kann eine Betriebsbremse, d.h. eine Auflaufbremse, und ggf. eine Feststellbremse umfassen.

Der Messring kann in unterschiedlicher Weise ausgebildet sein. Bei einer Variante werden durch die lokalen Vorsprünge auf der einen Stirnseite des Messrings definierte und in Umfangsrichtung verteilte Anlagepunkte gebildet, wobei der unverformte Korpusbereich des Messrings die Anlagefläche auf der anderen Stirnseite des Messrings bildet. Die Vorsprünge und die Anlagefläche sind in Umfangsrichtung zueinander versetzt. Der Messring bietet einen kurzen axialen Abstand zwischen der Krafteinleitungsfläche an den Vorsprüngen und der gegenüberliegenden Anlagefläche am Korpus. Es ergeben sich bei axialer Belastung kleine Momente an den Übergangsstellen zwischen den Vorsprüngen und dem angrenzenden Korpusbereich, wobei im wesentlichen reine Schubspannungen auftreten und gemessen werden können. Dies ist für eine genaue Messung auf kleinem Raum von Vorteil. Zudem ist kein zusätzliches Anschlagelement bei Überlast erforderlich.

Bei einer zweiten Variante der Erfassungseinrichtung kann der Messring zwei axial distanzierte Ringteile mit einem dazwischen axial angeordneten verdünnten Ringteil aufweisen, wobei an der äußeren Stirnseite der distanzierten Ringteile jeweils ein oder mehrere, nach außen weisende axiale Vorsprünge in Längsrichtung fluchtend angeordnet sind. Am verdünnten Ringteil kann ein Sensor zwischen den axialen Vorsprüngen angeordnet sein.

In einer dritten Variante der Erfassungseinrichtung kann der Messring zwei radial distanzierte Ringteile mit einem dazwischen mit radialer Richtungskomponente angeordneten verdünnten Ringteil aufweisen. Am verdünnten Ringteil kann mindestens ein Sensor angeordnet sein. Ein Ringteil kann in der Zugstange oder im fahrzeugfesten Gegenanschlag bzw. der Zugstangenlagerung versenkt und formschlüssig aufgenommen sein, wobei das andere Ringteil in den Spalt zwischen dem Anschlag an der Zugstange und dem fahrzeugfesten Gegenanschlag bzw. der Zugstangenlagerung ragt.

Der Messring kann zumindest an einer Stirnseite einen axialen Vorsprung aufweisen, der durch einen axialen Überstand zwischen den radial distanzierten Ringteilen gebildet wird. Die radial distanzierten Ringteile können zur Bildung des Vorsprungs bzw. Überstands unterschiedliche axiale Längen aufweisen und/oder können axial zueinander versetzt angeordnet sein.

Bei einer vierten Variante der Erfassungseinrichtung kann der Messring an beiden Stirnseiten mehrere jeweils nach außen gerichtete axiale Vorsprünge sowie dazwischen angeordnete und in Umfangsrichtung sich erstreckende verdünnte Ringteile mit einem Sensor aufweisen. Die entgegengesetzt gerichteten Vorsprünge können in Umfangsrichtung zueinander versetzt angeordnet sein.

Der Messring kann bei dieser Variante als Einzelring oder als Mehrfachring, insbesondere Doppelring, mit axial distanzierten und mit axialen Verbindungsstegen verbundenen Ringabschnitten ausgebildet sein. Die Ringabschnitte können an ihrer äußeren Stirnseite jeweils eine dem Einzelring entsprechende Ausbildung aufweisen.

An beiden Stirnseiten des Messrings kann zwischen den axialen Vorsprüngen jeweils ein weniger weit axial vorspringendes Anschlagelement angeordnet sein. Die Anschlagelemente an einer Stirnseite können jeweils einem axialen Vorsprung an der anderen Stirnseite axial gegenüber liegen. Die verdünnten Ringteile können jeweils zwischen einem Anschlagelement und einem axialen Vorsprung angeordnet sein.

Bei der zweiten bis vierten Variante können sich die verdünnten Ringteile unter der Zugkraft F in günstiger Weise verformen und ermöglichen durch die hier einseitig oder beidseitig angebrachten kraftaufnehmenden Sensoren eine besonders gute und feinfühlige Messung.

In einer fünften Variante der Erfassungseinrichtung kann der Messring als Federanordnung aus mehreren schräg gegeneinander angestellten Scheiben- oder Tellerfedern ausgebildet ist. An mindestens einer Scheiben- oder Tellerfeder kann mindestens ein Sensor angeordnet sein. Durch die Schräglage oder konische Ausbildung der Scheiben- oder Tellerfedern können die bevorzugt äußeren Federränder an beiden Stirnseiten des Messrings jeweils einen axialen Vorsprung bilden. Zwischen den schräg gegeneinander angestellten Scheiben- oder Tellerfedern kann ein Anschlagelement angeordnet sein.

Die bei einigen Varianten des Messrings vorgesehenen Anschlagelemente können zur Abstützung dienen. Sie begrenzen die Verformung des Messrings.

Die beanspruchte Ausbildung der Sensorik mit einem Messring und dort angeordneten ein oder mehreren kraftaufnehmenden Sensoren, insbesondere Dehnungsmessstreifen, hat messtechnische und einbautechnische Vorteile. Der mit einem oder mehreren lokalen Vorsprüngen versehene Messring wird beim Auftreten von Axialkräften, insbesondere Zugkräften, verformt, wobei diese Verformung mit Dehnungsmessstreifen oder auf geeignete andere Weise, z.B. durch magnetorestriktive Aufnehmer, detektiert und zur Kraftermittlung herangezogen werden kann. Die Anordnung von einem oder mehreren Sensoren an einer Übergangsstelle zwischen einer solchen Wölbung und dem restlichen Ringkorpus ist dabei günstig. Bei den anderen Varianten ist die Anordnung von einem oder mehreren Sensoren an einem verdünnten Ringteil günstig, welches unter Einwirkung der Zugkraft F verformt, insbesondere gestaucht oder gebogen wird.

Die Messsignale der Sensoriken zur Kraft- und Beschleunigungserfassung können einer Verarbeitungseinrichtung mittels einer leitungsgebundenen oder drahtlosen Signaleinrichtung zugeführt und dort zur Ermittlung der Masse des Fahrzeuganhängers verarbeitet werden. Die Verarbeitungseinrichtung kann eine eigene Einheit sein. Sie kann alternativ in einer bereits vorhandenen Recheneinheit oder einer Steuerung am Fahrzeuganhänger als Hardwaremodul und/oder Softwaremodul implementiert werden. Durch Nutzung vorhandener Komponenten der Sensorik und der Verarbeitungseinrichtung können Kosten gespart werden. Außerdem können die Mess- und Ermittlungswerte besser und schneller verwertet und bedarfsweise auch einem Fahrzeugnutzer angezeigt werden.

Anhand des bekannten oder vorab detektierten Anhängerleergewichts kann außerdem die Masse bzw. das Gewicht einer Beladung ermittelt werden.

Das Ergebnis der Massenerfassung kann für unterschiedliche Zwecke benutzt werden. Die Beladung des Fahrzeuganhängers kann z.B. optimiert bzw. ein Überladen vermieden werden. Das Ergebnis kann zu Kontrollzwecken angezeigt werden.

Das Ergebnis der Massenerfassung kann insbesondere für die Optimierung der Ausbildung und Funktion einer Stabilisierungstechnik benutzt werden. Die mit einer Sensorik der Stabilisierungseinrichtung erfassten kritischen Fahrzustände des Fahrzeuganhängers können dank der Massen- und Gewichtserfassung besser und wirksamer wieder stabilisiert werden. Die Massen- bzw. Gewichtserfassung des Fahrzeuganhängers kann außerdem zu anderen Zwecken verwendet werden, z.B. zur Kontrolle des Beladungszustandes für dessen Optimierung und zur Vermeidung von Überschreitungen des zulässigen Gesamtgewichts.

Die beanspruchte Erfassungstechnik ermöglicht eine Massen- bzw. Gewichtserfassung bei Fahrtbeginn, so dass die erfassten Daten bereits vor erstmaliger Betätigung bzw. Funktion der Stabilisierungstechnik bekannt sind und für deren Optimierung von Anfang an eingesetzt werden können. Mit anderen Worten wird eine antizipierende oder vorsteuernde Adaption der Bremseingriffe in Abhängigkeit von der momentanen Masse und/oder Gewicht bzw. Beladung des Fahrzeuganhängers vorgenommen.

Dies ist besonders günstig für Fahrzeuganhänger, insbesondere Nutzanhänger, bei denen die Differenz zwischen Leergewicht und zulässigem Gesamtgewicht sehr groß sein kann und mehrere Tonnen betragen kann. Die Stabilisierungstechnik kann sich an solche starken Massen- bzw. Gewichtsänderungen optimal anpassen und für jeden Beladungszustand die optimale Funktion bieten. Eine Massen- bzw. Gewichtserfassung im Stand hat außerdem Vorteile für eine Kontrolle des Beladungszustands zu anderen Zwecken.

Die Stabilisierungstechnik kann zusätzlich zu einer Bremseinrichtung des Fahrzeuganhängers, insbesondere einer Betriebsbremse und einer Feststellbremse, vorgesehen und angeordnet sein. Die Stabilisierungstechnik bewirkt eine Aktuierung der Radbremse(n) zur Vermeidung oder Begrenzung kritischer, instabiler Fahrzustände, wobei die Aktuierung durch mechanische, hydraulische, elektrische oder sonstige Betätigungskräfte bzw. mechanische Stellbewegungen bewirkt wird, die von einem Bremsaktuator in Überlagerung einer Betriebsbremse aufgebracht werden. Die Betriebsbremse, insbesondere eine Auflaufbremse, wird dabei nicht betätigt. Bei der Aktuierung einer Radbremse über einen Bremszug wird eine Relativbewegung zwischen dem inneren Seil und dem umgebenden Mantel des Bremszugs erzeugt. Ein geeignetes Bremsen an den Fahrzeugrädern bewirkt in Kombination mit den Kräften, die im Bereich der Anhängerkupplung zwischen dem Zugfahrzeug und dem Fahrzeuganhänger übertragen werden, insbesondere den Zugkräften in Längsrichtung des Fahrzeuganhängers, eine Restabilisierung des Fahrzustands.

Die Stabilisierungstechnik kann unterschiedlich ausgebildet sein. Die verschiedenen Komponenten der Stabilisierungseinrichtung, insbesondere die Sensorik, die Steuerung und der hiervon beaufschlagte Bremsaktuator zur Stabilisierung des erfassten kritischen Fahrzustands können gemeinsam am Fahrzeuganhäger angeordnet sein. Der Bremsaktuator kann eine anderweitige Bremseinrichtung des Fahrzeuganhängers überlagern. Letztere kann eine Betriebsbremse bzw. Auflaufbremse, sein. Andererseits können Teile der Stabilisierungseinrichtung im Zugfahrzeug angeordnet sein. Insbesondere können die Steuerung und gegebenenfalls auch der Bremsaktuator im Zugfahrzeug angeordnet sein. Für die konstruktive Ausgestaltung des Bremsaktuators und für dessen Anordnung sind ebenfalls eine Vielzahl von unterschiedlichen Ausbildungsmöglichkeiten vorhanden.

Die Stabilisierungseinrichtung kann unterschiedliche Arten von kritischen Fahrzuständen des Fahrzeuganhängers und ggf. des Gespanns detektieren. Dies können insbesondere Schlingererscheinungen des Fahrzeuganhängers sein. Die Stabilisierungseinrichtung kann als Schlingerbremseinrichtung ausgeführt sein. Daneben kann es noch andere kritische Fahrzustände, z.B. übermäßige Wankerscheinungen, Schwerpunktsänderungen durch Verrutschen der Ladung oder dgl. geben, die von der Stabilisierungstechnik ebenfalls bekämpft und restabilisiert werden können.

Die Erfassungseinrichtung ist mit der Steuerung der Stabilisierungseinrichtung verbunden. Die Steuerung kann dadurch den Bremsaktuator in Abhängigkeit von den detektierten instabilen kritischen Fahrzuständen und von der erfassten Masse bzw. des Gewichts des Fahrzeuganhängers steuern. Der Bremsaktuator kann eine oder mehrere Radbremsen betätigen. Dies kann auf unterschiedliche Weise, z.B. mechanisch, hydraulisch, elektrisch oder dgl. erfolgen. Der Bremsaktuator kann dabei eine vorhandene anderweitige Bremseinrichtung des Fahrzeuganhängers, insbesondere eine Betriebsbremse, überlagern. Er kann alternativ in die Betriebsbremse integriert werden. Dies ist insbesondere bei einer elektrischen oder hydraulischen Bremseinrichtung und bei einer elektrischen oder hydraulischen Betätigung der Radbremsen möglich.

Die Steuerung kann das Ansprechverhalten des Bremsaktuators in Abhängigkeit von der erfassten Masse adaptieren, insbesondere einen oder mehrere Auslöse-Grenzwerte für das Auslösen eines ggf. überlagerten Bremseingriffs verändern. Je höher das aktuelle Fahrzeuggewicht ist, desto früher kann die Stabilisierungseinrichtung ansprechen und der Bremseingriff erfolgen.

Alternativ oder zusätzlich kann die Steuerung in der besagten Massenabhängigkeit die Intensität eines Bremseingriffs des Bremsaktuators verändern, insbesondere einen Kraftbeschränkungs-Grenzwert für die Begrenzung des Bremseingriffs vorsehen oder adaptieren. Ferner kann auch die Steuerung in der besagten Massenabhängigkeit die Dynamik eines Bremseingriffs des Bremsaktuators beschränken, insbesondere einen Dynamikbeschränkungs-Grenzwert vorsehen oder adaptieren. Durch Adaption der Bremskraft und Dynamik kann ein Überbremsen verhindert und eine bessere Restabilisierung des Fahrzeuganhängers erreicht werden. Dies geschieht bereits beim ersten stabilisierenden Bremseingriff und ist insbesondere für Nutzfahrzeuge mit hoher Zuladung und niedrigem Leergewicht von Vorteil.

Die Erfassungseinrichtung kann evtl. eine oder mehrere weitere lasterfassende Sensoriken aufweisen, die am Fahrzeuganhänger angeordnet sind bzw. zur Anordnung an einem Fahrzeuganhänger vorgesehen und ausgebildet sind.

Aus einer lasterfassenden Sensorik der Erfassungseinrichtung, insbesondere aus deren Mehrfachordnung, können auch Zusatzinformation für die Detektion eines kritischen Fahrzustands gewonnen werden. Die diesbezügliche (Schlinger-)Sensorik kann von der oder den lasterfassenden Sensorik(en) ergänzt oder ggf. ersetzt werden.

Die Sensorsignale und/oder die hieraus ermittelten Massen- bzw. Gewichtswerte können an einer Anzeige am Fahrzeug und/oder an einer fahrzeugexternen Anzeige angezeigt werden. Dies kann auf optischen, akustischen oder anderem Wege geschehen. Eine fahrzeugexterne Anzeige kann an einem mobilen externen Anzeigegerät, z.B. einem Smartphone, Tablet oder dgl. oder auch in einem Zugfahrzeug erfolgen.

Die Stabilisierungseinrichtung kann außer den besagten kritischen Fahrzuständen auch andere Zustände erfassen und bedarfsweise kommunizieren sowie signalisieren. Dies können eigene Betriebszustände der Stabilisierungseinrichtung, Zustände von Anhängerkomponenten z.B. Bremsbelagverschleiß, Bremstemperatur etc. oder Zustände in der Umgebung, z.B. Fahrzeugabstand von einem Hindernis, Neigung des Untergrunds oder dgl. sein. Die Signaleinrichtung hat zur Kommunikation dieser Daten nach außen eine Kommunikationseinrichtung, die in einer bevorzugten Ausführung drahtlos funktioniert. Sie kann alternativ oder zusätzlich drahtgebunden funktionieren.

Die Stabilisierungstechnik kann eine eigenständige Technik sein, die zusammen mit der Massen-Erfassungstechnik und der Kommunikationstechnik an einem Fahrzeuganhänger bei der Erstausrüstung implementiert oder später nachgerüstet werden kann. Die Massen-Erfassungstechnik kann auch bei einer bestehenden Stabilisierungstechnik nachgerüstet werden. Ferner kann auch die besagte Detektion von weiteren Zuständen und Funktionen von Anhängerkomponenten und/oder von der Umgebung bei der Erstausrüstung implementiert oder nachgerüstet werden.

Die Nachrüstungen können ohne größere Eingriffe am bestehenden Fahrzeuganhänger erfolgen. Insbesondere ist keine erneute Zulassung des Fahrzeuganhängers erforderlich. Außerdem kann diese Zusatzfunktionalität und zusätzliche Erfassung sehr kostengünstig implementiert werden und bedarf auch keiner separaten Signalisierungs- und Kommunikationstechnik.

In den Unteransprüchen sind weitere vorteilhafte Ausgestaltungen der Erfindung angegeben.

Weitere Ausgestaltungen der Erfindung können folgende Merkmale einzeln oder in Kombination beinhalten.

Die Erfassungseinrichtung kann die Masse bzw. das Gewicht bei Fahrtbeginn oder spätere während der Fahrt des Fahrzeuganhängers erfassen.

Die Erfassungseinrichtung und/oder die Stabilierungseinrichtung kann eine Energieversorgung aufweisen oder mit einer Energieversorgung des Fahrzeugs, insbesondere des Fahrzeuganhängers, verbindbar bzw. verbunden sein.

Die Erfassungseinrichtung und/oder die Stabilisierungseinrichtung kann nachrüstbar ausgebildet sein, bzw. kann nachgerüstet werden.

Die Achse des Fahrzeuganhängers kann als gefederte Radlenkerachse ausgebildet sein. Die Achse kann einen schwenkbaren Radlenker mit einer Radlagerung und mit einem Achszapfen aufweisen. Der Fahrzeuganhänger kann eine Deichsel mit einer Anhängerkupplung aufweisen.

Der Fahrzeuganhänger kann eine Bremseinrichtung, insbesondere eine Betriebsbremse und eine Feststellbremse, aufweisen.

Das Fahrzeug, insbesondere der Fahrzeuganhänger, mit der Stabilierungstechnik kann eine Energieversorgung aufweisen.

Das Fahrzeug, insbesondere der Fahrzeuganhänger, kann einen Aufbau aufweisen.

Die Erfindung ist in den Zeichnungen beispielhaft und schematisch dargestellt. Im Einzelnen zeigen:
- Figur 1:: eine Seitenansicht eines Gespanns mit einem Fahrzeuganhänger, einer Stabilisierungseinrichtung und einer Erfassungseinrichtung für die Masse bzw. das Gewicht des Fahrzeuganhängers,
- Figur 2:: eine Draufsicht auf den Fahrzeuganhänger von Figur 1,
- Figur 3 und 4:: ausschnittsweise Darstellungen von zwei Varianten eines Bremsaktuators der Stabilisierungseinrichtung,
- Figur 5:: eine Auflaufeinrichtung mit einer ersten Variante einer Sensorik zur Messung der axialen Zugkraft in perspektivischer Ansicht,
- Figur 6:: eine vergrößerte Darstellung des Details VI von Figur 5,
- Figur 7 und 8:: Ausführungsformen eines Messrings der Sensorik von Figur 5,
- Figur 9:: eine zweite Variante der Sensorik zur Messung der axialen Zugkraft in perspektivischer Ansicht,
- Figur 10 und 11:: die Auflaufeinrichtung von Figur 5 in einer anderen perspektivischer Ansicht und in einem Längsschnitt,
- Figur 12:: eine dritte Variante der Sensorik zur Messung der axialen Zugkraft in geschnittener Ansicht gemäß Detail XII von Figur 11,
- Figur 13 bis 16:: Ausführungsformen eines Messrings der Sensorik von Figur 12,
- Figur 17:: eine vierte Variante der Sensorik zur Messung der axialen Zugkraft in geschnittener Ansicht,
- Figur 18 und 19:: Ausführungsformen eines Messrings der Sensorik von Figur 17 und
- Figur 20:: eine fünfte Variante der Sensorik zur Messung der axialen Zugkraft in geschnittener Ansicht.

Die Erfindung betrifft eine Erfassungseinrichtung (2) und ein Erfassungsverfahren für die Masse eines Fahrzeuganhängers (1). Die Erfindung betrifft ferner eine Stabilisierungseinrichtung (3) und ein Stabilisierungsverfahren für einen Fahrzeuganhänger (1). Die Erfindung betrifft außerdem den Fahrzeuganhänger (1) mit einer Erfassungseinrichtung (2) und ggf. mit einer Stabilisierungseinrichtung (3).

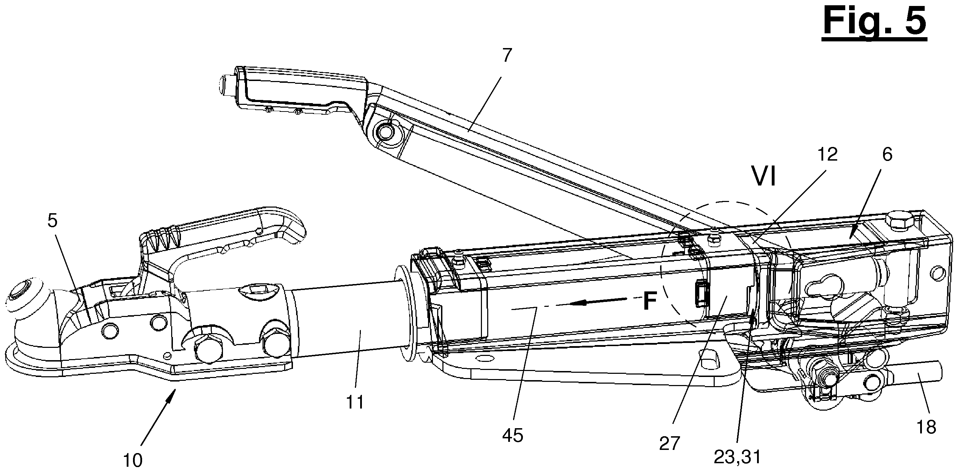

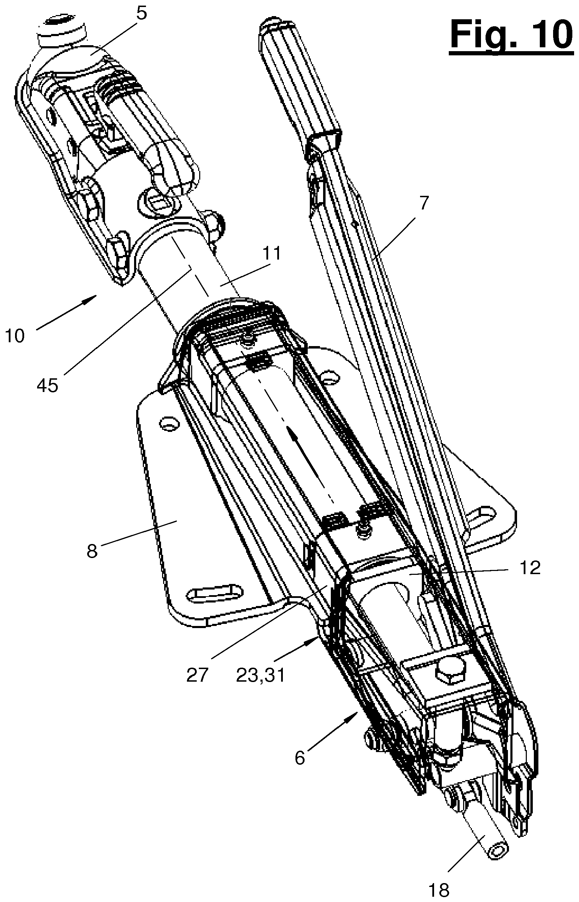

Die Erfassungseinrichtung (2) ist für den Anbau an einem Fahrzeuganhänger (1) vorgesehen und ausgebildet, der eine Auflaufeinrichtung (10) und ggf. eine Anhängerkupplung (5) aufweist. Figur 5, 10 und 11 zeigen die Auflaufeinrichtung (10) in verschiedenen Ansichten.

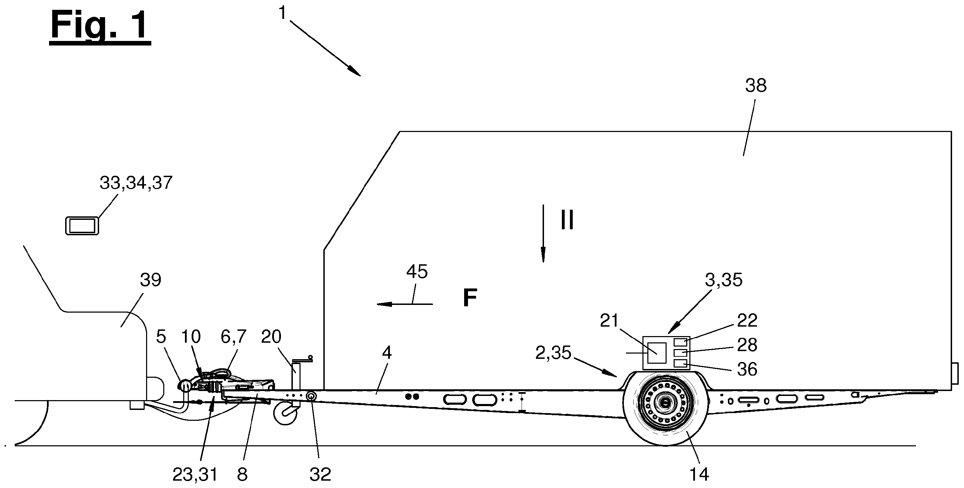

Figur 1 zeigt in einer abgebrochenen und schematischen Seitenansicht ein Gespann bestehend aus einem Zugfahrzeug (39) und einem angekuppelten Fahrzeuganhänger (1). Der Fahrzeuganhänger (1) weist ein Fahrgestell (4) mit einer oder mehreren Achsen (9) nebst Fahrzeugrädern (14) auf. Die ein oder mehreren Achsen (9) sind als gefederte Radlenkerachse, z.B. als Längslenkerachse oder als Schräglenkerachse ausgebildet.

Die Radbremse (17) ist z.B. als Trommelbremse ausgebildet, wobei die Bremstrommel mitsamt der Nabe auf dem Kompaktlager angeordnet ist. Alternativ ist eine andere Bremsausbildung z.B. als Scheibenbremse möglich, die mechanisch, elektrisch, hydraulisch oder in sonstiger Weise betätigt werden kann.

Das Fahrgestell (4) trägt einen Aufbau (38), z.B. einen Kasten-, Pritschen- oder Kipperaufbau, insbesondere einen Wohnwagenaufbau. Das Fahrgestell (4) besteht aus zwei oder mehr parallelen Längsträgern und ggf. ein oder mehreren Querträgern, die bevorzugt jeweils aus mehrfach abgekanteten Metallprofilen, insbesondere Stahlprofilen, bestehen. Alternativ sind andere Materialien und Bauformen des Fahrgestells (4) möglich.

Ferner weist das Fahrgestell (4) an der Front eine Deichsel (8) auf. Diese ist vorzugsweise als starre Deichsel ausgebildet. Dies kann eine V-Deichsel wie in den gezeigten Ausführungsbeispielen oder eine Rohrdeichsel oder dgl. sein. Am vorderen Deichselende ist eine Anhängerkupplung (5) angeordnet, die z.B. als Kugelkopfkupplung ausgebildet ist. Ferner können am Fahrgestell (4) ein ausfahrbares Stützrad (20) und eine Halterung mit Unterlegkeilen (nicht dargestellt) sowie weitere Anhängerkomponenten angeordnet sein.

Der Fahrzeuganhänger (1) weist eine oder mehrere Bremseinrichtungen (6,7) sowie die nachfolgend beschriebene Stabilisierungseinrichtung (3) auf. Die Bremseinrichtung (6) ist als Betriebsbremse, z.B. als Auflaufbremse ausgebildet. Die Auflaufbremse hat eine mit der Anhängerkupplung (5) verbundene Auflaufeinrichtung (10). Die Bremseinrichtung (7) kann eine Feststellbremseinrichtung, insbesondere eine Handbremseinrichtung, sein.

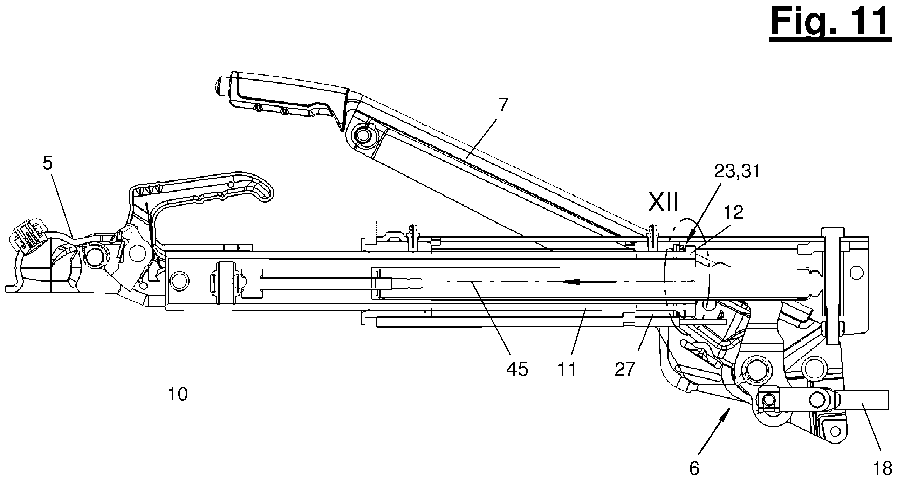

Die Auflaufeinrichtung (10) weist eine axial verschiebliche Zugstange (11) auf, die am vorderen Ende mit der Anhängerkupplung (5) verbunden ist und am hinteren Ende einen bevorzugt plattenförmigen und seitlich bzw. radial über den Zugstangenmantel vorstehenden stangenfesten Anschlag (12) aufweist. Die Zugstange (11) erstreckt sich in Längsrichtung (45) und ist in einer fahrzeugfesten Lagerung (27) aufgenommen. Die Lagerung (27) befindet sich vor dem Anschlag (12) und ist an der Deichsel (8) befestigt. Die Zugstange (11) wirkt am hinteren Ende mit einer rückstellenden Dämpfeinrichtung zusammen und ist über einen Umlenkhebel mit den Radbremsen (17) verbunden. Figur 11 verdeutlicht in einem zentralen Längsschnitt diese Anordnung.

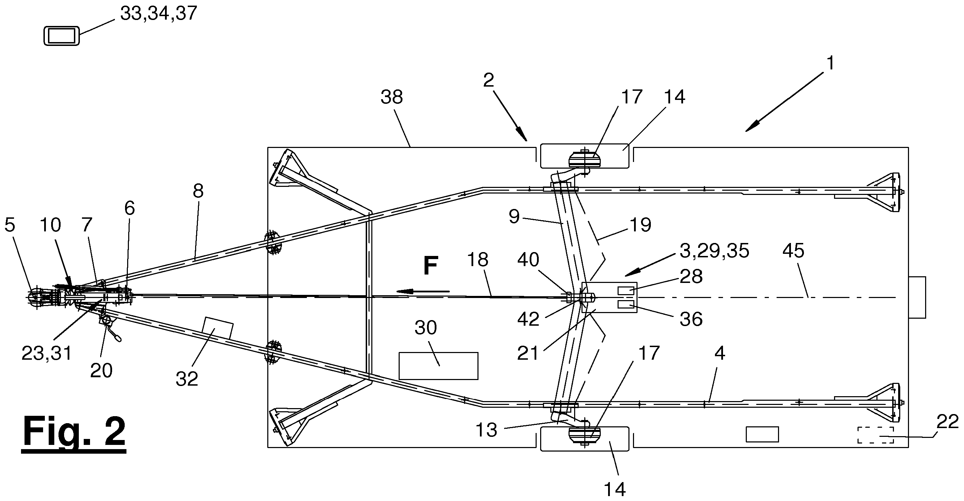

Die Bremseinrichtungen (6,7) wirken über eine ggf. gemeinsame Bremsübertragungseinrichtung (18), z.B. ein mit dem Umlenkhebel verbundenes Bremsgestänge oder ein Bremsseil, auf Bremszüge (19), die zu den Radbremsen (17) an den Rädern (14) führen. Die Bremsübertragungseinrichtung (18) und die Bremszüge (19) können über einen in Figur 2, 3 und 4 dargestellten Waagbalken (40) oder ein anderes Ausgleichselement miteinander verbunden sein. Der Waagbalken (40) ist mit der Bremsübertragungseinrichtung (18) über einen gerundeten Mitnehmer (41) schwenkbar verbunden.

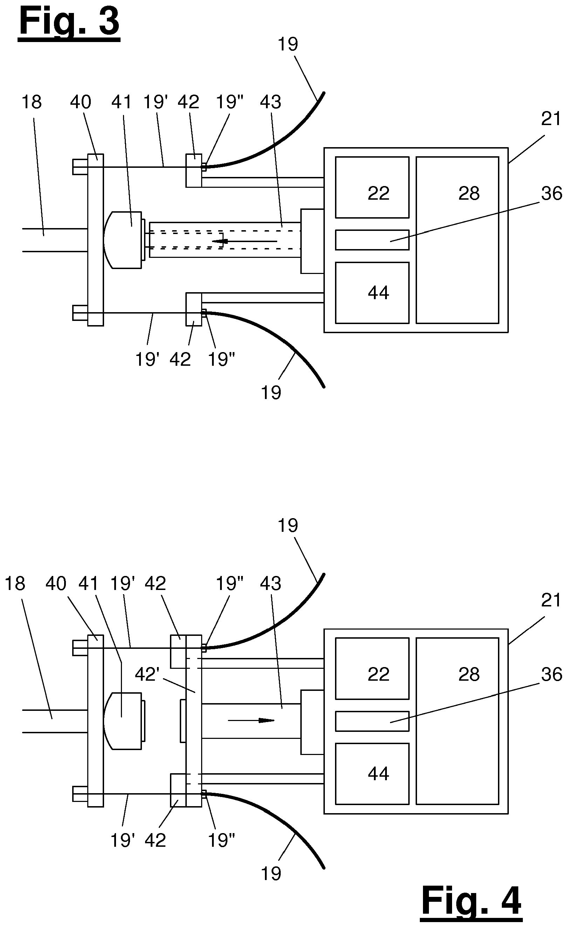

Die gezeigten Bremszüge (19) sind gemäß Figur 3 und 4 als Bowdenzüge mit jeweils einem inneren Seil (19') und einer äußeren Hülle oder einem Mantel (19") ausgebildet. Bei der Betätigung eines Bremszugs (19) wird eine Relativbewegung zwischen dem Seil (19') und dem Mantel (19") erzeugt. Die Seile (19') sind gemäß Figur 3 und 4 mit der beweglichen Bremsübertragungseinrichtung (18) verbunden. Sie sind z.B. am Ausgleichselement (40), insbesondere Waagbalken, beidseits der Bremsübertragungseinrichtung (18) bzw. der Längsachse (45) eingehängt. Die Mäntel (19") sind ebenfalls beidseits an einer Halterung (42) befestigt und abgestützt. Die Halterung (42) kann gemäß Figur 1 und 2 an der Achse (9), insbesondere am Achskörper und dort bevorzugt rückseitig, montiert sein. Die Bremsübertragungseinrichtung (18) zieht beim Bremsen die Seile (19') an, wobei die Mäntel (19") abgestützt sind.

Die Erfassungseinrichtung (2) weist eine Sensorik (23) zur Messung der am Fahrzeuganhänger (1) in dessen Längsrichtung (45) wirkenden Zugkraft (F) und eine Sensorik (22) zur Erfassung der am Fahrzeuganhänger (1) in der gleichen Längsrichtung (45) wirkenden Beschleunigung auf. Die Erfassungseinrichtung (2) kann ferner eine Verarbeitungseinrichtung (29) für die Signale der Sensoriken (22,23) aufweisen. Die Erfassungseinrichtung (2) kann auch eine Signaleinrichtung (31) für die leitungsgebundene oder drahtlose Kommunikation der Messsignale an die Verarbeitungseinrichtung (29) beinhalten.

Zum Umfang der Erfassungseinrichtung (2) kann ferner eine anhängerseitige Anzeige (32) und/oder eine fahrzeugexterne Anzeige (33) gehören. Diese können z.B. die ermittelte Masse des Fahrzeuganhängers (1) und ggf. weitere Informationen anzeigen. Dies können Meldungen über Betriebs- und Funktionsbereitschaft oder einen Fehler der Erfassungseinrichtung (2) oder dgl. sein. Ferner kann ein Warnsignal ausgegegeben werden, falls ein maximal zulässiges Gesamtgewicht des Fahrzeuganhängers (1) überschritten wird oder eine Fehlbedienung oder ein Fehler oder dgl. vorliegen. Die Anzeigen (32,33) können optisch, akustisch und/oder haptisch anzeigen. Die Erfassungseinrichtung (2) ist mit einer eigenen Energieversorgung, insbesondere Stromversorgung, oder mit des Energieversorgung (30) Fahrzeuganhängers (1) verbunden.

Die Erfassungseinrichtung (2) kann aus den jeweils auf die Längsrichtung (45) bezogenen sensorischen Messwerten für die an der Auflaufeinrichtung (10) wirkende Zugkraft (F) und für die Beschleunigung die aktuelle Masse des Fahrzeuganhängers (1) nach der Formel m = F/a berechnen.

In die Berechnung können ggf. Zusatzparameter einfließen, die z.B. die aktuellen Umgebungsbedingungen betreffen und die durch eine oder mehrere weitere Detektionseinrichtungen erfasst und signalisiert werden können. Dies können z.B. Zusatzparameter über die Bodenbeschaffenheit, die Reibungsverhältnisse, die Feuchtigkeit bzw. Temperatur in der Umgebung oder dgl. sein. Insbesondere kann hierbei z.B. ein reibungsarmer Untergrund, z.B. nasses Gras, detektiert werden. Das Detektionsergebnis kann in die Massenberechnung in geeigneter Weise, z.B. durch empirische Korretkurwerte oder Formeln, einbezogen werden.

In Figur 5 bis 9 und Figur 12 bis 20 sind verschiedene Varianten der Erfassungseinrichtung (2) und ihrer kraftmessende Sensorik (23) sowie deren Anordnung an der Auflaufeinrichtung (10) dargestellt.

Die Sensorik (22) zur Messung der axialen Beschleunigung kann an beliebiger Stelle des Fahrzeuganhängers (1) angeordnet sein, z.B. im Heckbereich gemäß Figur 2. Die Sensorik (22) und die Verarbeitungseinrichtung (29) können eigenständige Komponenten und Bestandteile der Erfassungseinrichtung (2) sein. Sie können alternativ fahrzeugseitig bereits vorhanden sein, wobei sie z.B. Bestandteil einer nachfolgend erläuterten Stabilisierungseinrichtung (3) oder einer anderen Einrichtung sein können.

Figur 5 bis 8 verdeutlichen eine erste Variante der kraftmessenden Sensorik (23) und deren Anordnung an der Auflaufeinrichtung (10).

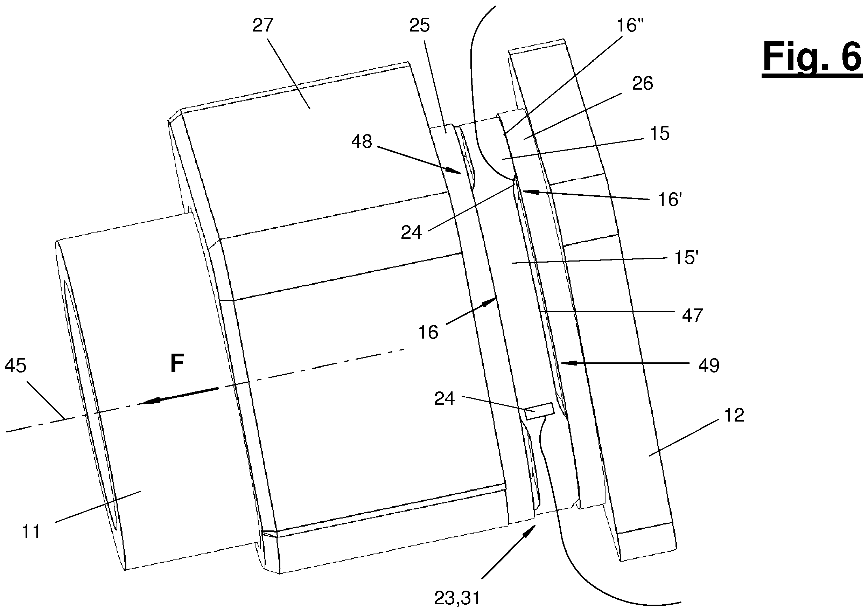

Die kraftmessende Sensorik (23) weist einen bevorzugt kreisringförmigen Messring (15) mit einem oder mehreren kraftaufnehmenden Sensoren (24) auf, der auf der Zugstange (11) der Auflaufeinrichtung (10) angeordnet ist und hierfür eine entsprechende Ausbildung hat. Wie Figur 5 und 6 verdeutlichen, befindet sich der Messring (15) zwischen dem Anschlag (12) und der fahrzeugfesten Lagerung (27) der Zugstange (11) oder einem anderen fahrzeugfesten Gegenanschlag und ist hierfür entsprechend ausgebildet. Der Messring (15) kann aus Metall oder aus einem anderen elastisch verformbaren und hinreichend festen Material bestehen.

Der Messring (15) weist gemäß Figur 6, 7 und 8 einen kreisringförmigen Korpus (15') mit einer oder mehreren lokalen axialen Vorsprüngen (16), insbesondere axialen Wölbungen, auf. Beispielsweise sind drei Wölbungen (16) an dem kreisringförmigen Messring (15) in Umfangsrichtung verteilt angeordnet. Sie weisen jeweils in die gleiche axiale Richtung gemäß der Längsachse (45). Auf der anderen Stirnseite weist der Korpus (15') unterhalb der Vorsprünge (16) jeweils eine Ausnehmung (46) auf. Durch diese Ausbildung hat der Messring (15) an der vorderen und hinteren Stirnseite jeweils eine axial profilierte Ausbildung (48,49).

Die kraftmessende Sensorik (23) kann ferner eine oder mehrere Anlaufringscheiben (25,26) aufweisen, die an einer oder beiden Axialseiten am Messring (15) anliegen und die ebenfalls auf der Zugstange (11) angeordnet sind. Die kreisringförmigen Anlaufringscheiben (25,26) sind hierfür entsprechend ausgebildet. In der gezeigten Ausführungsform liegt die eine Anlaufringscheibe (26) zwischen dem Anschlag (12) und dem Messring (15). Die andere Anlaufringscheibe (25) ist zwischen dem Messring (15) und der Lagerung (27) bzw. dem Gegenanschlag angeordnet. Die Anlaufringscheiben (25,26) können eine flache Scheibenform mit ebenen Stirnseiten aufweisen. Eine oder beide Anlaufringscheiben (25,26) können alternativ entfallen.

Der Messring (15) und die ein oder mehreren Anlaufringscheiben (25,26) können auf dem Umfang der Zugstange (11) stationär angeordnet sein, z.B. mittel einer Press- oder Klemmpassung. In Abweichung der gezeigten Zylinder- oder Ringform der Zugstange (11) kann auch eine andere, z.B. prismatische, Umfangsform vorhanden sein, an die der Messring (15) und die Anlaufringscheibe(n) (25,26) entsprechend angepasst sind.

Die lokalen axialen Vorsprünge (16) der ersten Variante sind brückenartig ausgebildet und werden z.B. aus dem Korpus (15') des Messrings (15) herausgeprägt, wobei sich schräge Übergangsstellen (16') ergeben. Die axialen Vorsprünge (16) weisen am erhabenen und über den angrenzenden Korpus (15') des Messrings (15) axial vorspringenden Bereich eine ebene und quer zur Achse (45) gerichtete Oberfläche auf. Die Vorsprünge (16) liegen mit diesen Oberflächen plan an der benachbarten Anlaufringscheibe (26) oder dem benachbarten Anschlag (12) an.

Durch die brückenartige Verformung oder Wölbung hat der Korpus (15') im Bereich zwischen den Vorsprüngen (16) eine ebenfalls ebene und quer zur Achse (45) ausgerichtete Oberfläche oder Anlagefläche (16"). Der Korpus (15') liegt mit diesem Bereich an der benachbarten Anlaufringscheibe (25) oder an der Lagerung bzw. dem Gegenanschlag (27) an. Durch diese Profilierung (48,49) werden an den Vorsprüngen (16) eingeleitete axiale Zugkräfte an einer in Umfangsrichtung versetzten Stelle des Korpus (15') auf der anderen Ringseite abgestützt. Hierdurch werden die Übergangstellen (16') zwischen den Vorsprüngen (16) und dem Korpus (15) auf Schub belastet. Die Einbaulage des Messrings (15) kann auch umgedreht werden.

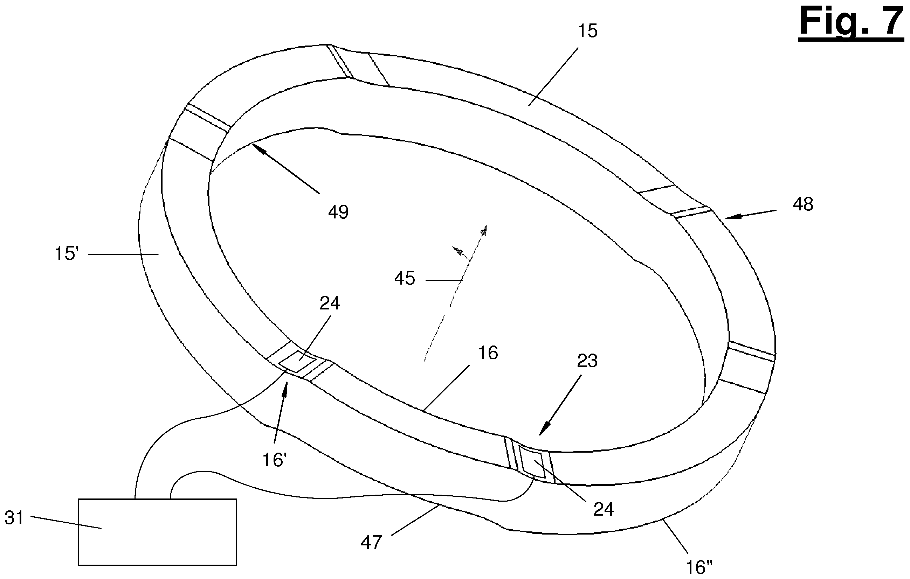

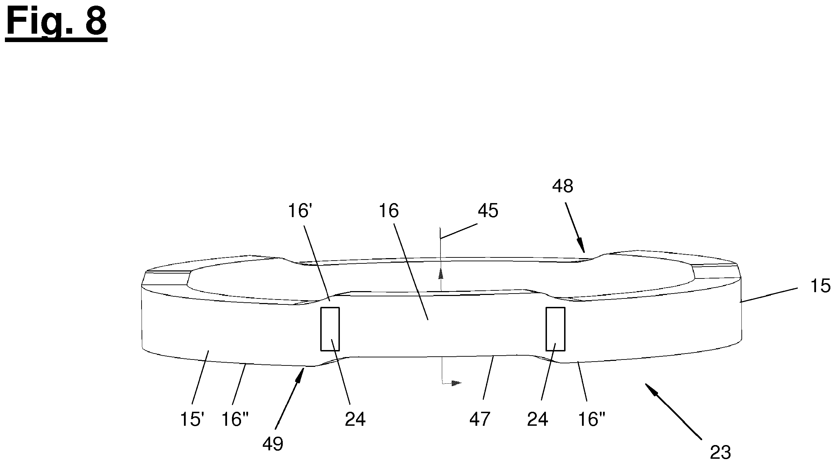

Die ein oder mehreren Sensoren (24) sind in beliebig geeigneter Weise am Messring (15) angeordnet und können in beliebig geeigneter Weise die Zugkraft erfassen. In den gezeigten Ausführungsformen von Figur 7 und 8 sind die Sensoren (24) an der Außenseite des Messrings (15) angeordnet. Vorzugsweise befinden sich die ein oder mehreren Sensoren (24) jeweils an einer Übergangsstelle (16') zwischen dem Korpus (15') und einem Vorsprung (16).

In der Ausführungsform von Figur 7 sind die z.B. als Dehnmessstreifen ausgebildeten Sensoren (24) an einer Stirnseite des Messrings (15) und an der Übergangsstelle (16') angeordnet. In der Ausführungsform von Figur 8 sind die Sensoren (24) jeweils im Bereich einer Übergangsstelle (16') angeordnet, wobei sie sich am Außenumfang des Messrings (15) befinden. Diese Sensoren (24) messen Schubspannungen an der verformten Übergangsstelle (16'), die bei der besagten axialen Belastung des Messrings (15) durch die Zugkraft auftreten. Figur 6 zeigt beide Anordnungsvarianten.

Die ein oder mehreren Sensoren (24) messen in der gezeigten und bevorzugten Ausführungsform eine Dehnung, aus der eine axiale Kraft in Längs- oder Axialrichtung (45) ermittelt wird. Bei der gezeigten profilierten Ausbildung des Messrings (15) treten Dehnungen besonders an den Übergangsstellen (16') auf und werden hier mit dem oder den Sensoren (24) erfasst.

Der oder die Sensoren (24) sind z.B. als Dehnmessstreifen ausgebildet. Diese können auf der Oberfläche des Messrings (15) in geeigneter Weise appliziert werden, z.B. durch Aufkleben. In den gezeigten und bevorzugten Ausführungsformen handelt es sich um laserstrukturierte Dehnmessstreifen, die in die Ringoberfläche und bevorzugt an der jeweiligen Übergangsstelle (16') eingearbeitet sind.

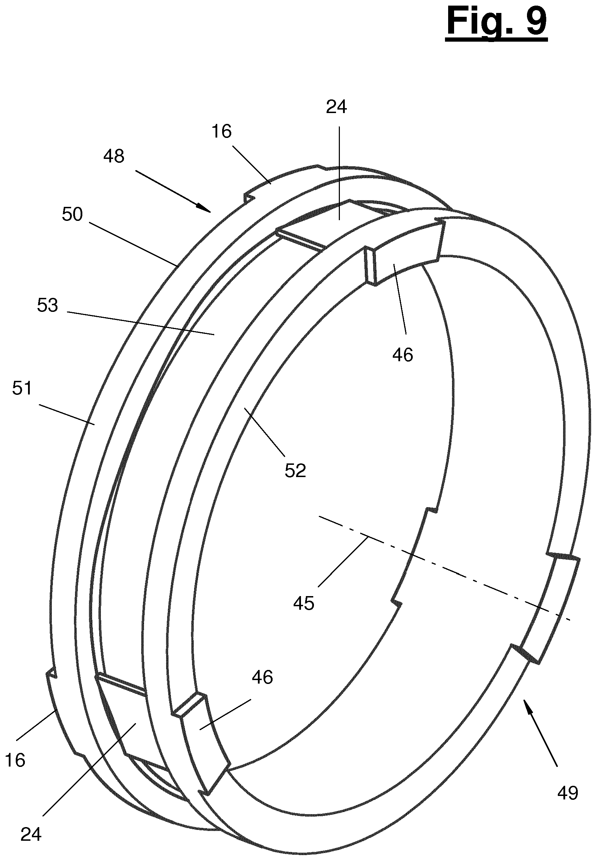

Figur 9 zeigt eine zweite Variante der Erfassungseinrichtung (2), der kraftmessenden Sensorik (23) und des Messrings (50). Der Messring (50) kann an gleicher Stelle an der Auflaufeinrichtung (10) angeordnet sein wie der Messring (15) der ersten Variante.

Der Messring (50) weist zwei axial distanzierte Ringteile (51,52) auf, die eine relativ große Wandstärke bzw. radiale Dicke aufweisen. Zwischen den distanzierten Ringteilen (51,52) ist ein Ringteil (53) axial angeordnet, welches verdünnt ist bzw. eine geringere radiale Wandstärke aufweist. An der äußeren Stirnseite der distanzierten Ringteile (51,52) sind jeweils ein oder mehrere, z.B. drei oder mehr, axiale Vorsprünge (16,46) angeordnet, die jeweils nach außen weisen. Die Vorsprünge (16,46) können an ihrem jeweiligen Ringteil (51,52) befestigt oder angeformt sein.

Die Vorsprünge (16,46) können eine konzentrisch zur Längsachse (45) gebogene Form aufweisen. Sie haben vorzugsweise ebene Stirnseiten. Die nach unterschiedlichen Richtungen weisenden axialen Vorsprünge (16,46) sind in Längsrichtung (45) fluchtend angeordnet. Die an einem Vorsprung (16) eingeleitete axiale Zugkraft (F) wird in Axialrichtung über das verdünnte Ringteil (53) auf den in Längsrichtung fluchtenden anderen axialen Vorsprung (46) übertragen. Der zwischen den Vorsprüngen (16,46) befindliche Bereich des verdünnten Ringteils (53) wird dabei in Axialrichtung gestaucht.

Am verdünnten Ringteil (53) ist zwischen den entgegengesetzt gerichteten axialen Vorsprüngen (16,46) ein Sensor (24) angeordnet. Dies kann ein kraftaufnehmender Sensor (24) sein, der in der vorbeschriebenen Weise die Stauchverformung aufnimmt. Ein Sensor (24) kann zwischen einzelnen oder allen Paaren von entgegengesetzt gerichteten Vorsprüngen (16,46) angeordnet sein. Der gezeigte Messring (50) ist durch die paarweise Anordnung der entgegengesetzt gerichteten axialen Vorsprünge (16,46) und die axiale Stauchbelastung mechanisch stabil.

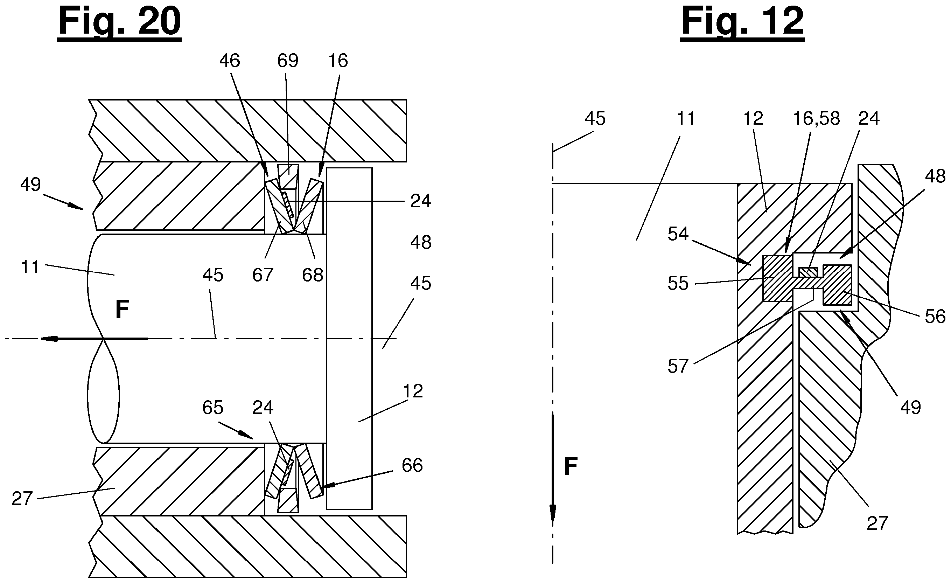

Figur 12 bis 16 zeigen eine dritte Variante der Erfassungseinrichtung (2), der kraftmessenden Sensorik (23) und des Messrings (54), bei welcher der Messring (54) zwei radial distanzierte Ringteile (55,56) mit einem dazwischen angeordneten und verbindenden Ringteil (57) aufweist. Die radial distanzierten Ringteile (55,56) haben eine größere axiale Wandstärke oder Länge als das verdünnte Ringteil (57). Sie können eine zylindrische Form haben. Das verdünnte Ringteil (57) ist mit einer radialen Richtungskomponente zwischen den distanzierten Ringteilen (55,56) angeordnet, wobei Figur 12 bis 16 verschiedene Ausbildungen und Anordnungen des verdünnten Ringteils (57) zeigen.

An dem verdünnten Ringteil (57) sind an einer oder beiden Stirnseiten jeweils ein oder mehrere kraftaufnehmende Sensoren (24) der vorgenannten Art angeordnet.

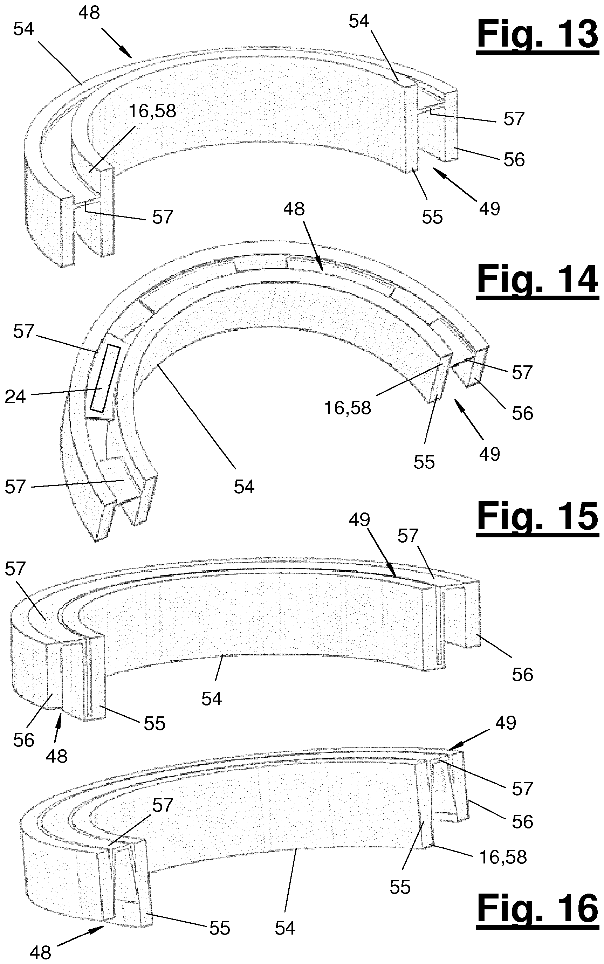

In Figur 12 ist der verdünnte Ringteil (57) als radialer Steg zwischen den distanzierten Ringteilen (55,56) ausgebildet. Figur 13 und 14 zeigen eine entsprechende Anordnung. Der verdünnte Ringteil oder Steg (57) kann in Umfangsrichtung eine geschlossene Form aufweisen gemäß Figur 13. Alternativ ist eine stellenweise unterbrochene Form gemäß Figur 14 möglich.

Bei den Ausführungen von Figur 15 und 16 hat der verdünnte Ringteil (57) eine abgewinkelte Stegform bzw. Querschnittsform. Der in Figur 15 gezeigte Querschnitt ist Z-förmig und weist ein axiales Stegteil und zwei endseitig anschließende radiale Stegteile auf, welche eine gleiche oder unterschiedliche Länge haben können. Die radialen Stegteile sind mit jeweils einem der distanzierten Ringteile (55,56) verbunden, z.B. angeformt. Die Verbindungsstellen befinden sich an unterschiedlichen stirnseitigen Endbereichen der bevorzugt zylindrischen distanzierten Ringteile (55,56).

Bei der Ausführung von Figur 16 hat das verdünnte Ringteil (57) eine im Wesentlichen U-förmige Stegform. Das mittlere Stegteil ist radial ausgerichtet, wobei die beidseits anschließenden und bevorzugt schräg ausgestellten schenkelartigen Stegteile an jeweils einen der distanzierten Ringteile (55,56) und dort in einem mittleren Bereich angebunden sind, vorzugsweise angeformt sind.

Bei beiden Ausführungen von Figur 15 und 16 entstehen dadurch zwischen dem radialen Stegteil und einem oder beiden angebundenen distanzierten Ringteilen (55,56) Spalte. Die z.B. Z- oder U-artige Stegform und die Spalte sind für eine definierte und messtechnisch gut erfassbare Biegeverformung des verdünnten Ringteils (57) günstig.

Am verdünnten Ringteil (57) sind ein oder mehrere der besagten kraftaufnehmenden Sensoren (24) einseitig oder beidseitig angeordnet. Sie befinden sich vorzugsweise am radialen Stegteil.

Der Messring (54) der dritten Variante weist zumindest an einer Stirnseite einen axialen Vorsprung (16) auf. Dieser wird durch einen axialen Überstand (58) zwischen den radial distanzierten Ringteilen (55,56) gebildet. Hierfür gibt es verschiedene Gestaltungsmöglichkeiten. Die radial distanzierten Ringteile (55,56) können eine unterschiedliche axiale Länge aufweisen. Sie können alternativ oder zusätzlich in Axialrichtung (45) einen gegenseitigen Versatz aufweisen. An einer Stirnseite des Messrings (54) sind die distanzierten Ringteile (55,56) vorzugsweise in Radialrichtung gesehen auf gleicher Höhe angeordnet. An dieser Stelle kann sich z.B. bei den Ausführungen von Figur 15 und 16 der radiale Stegbereich des verdünnten Ringteils (57) befinden.

Eines der radial distanzierten Ringteile (55,56) kann relativ ortsfest an der Zugstange (11) oder am fahrzeugfesten Gegenanschlag (27) bzw. der Lagerung der Zugstange angeordnet sein. Das andere Ringteil ragt in den zwischen dem Anschlag (12) und dem Gegenanschlag (27) bzw. der Zugstangenlagerung gebildeten Spalt und wird unter Einwirkung der Zugkraft (F) mitgenommen, wobei der verdünnte Ringteil (57) einer Biegeverformung unterliegt, die mit dem oder den kraftaufnehmenden Sensoren (24) erfasst wird.

In den gezeigten Ausführungen der dritten Variante ist z.B. der innere Ringteil (55) an der Zugstange (11) versenkt aufgenommen. Er kann z.B. in eine ringartige Ausnehmung am Außenmantel der Zugstange (11) formschlüssig und an der Manteloberfläche bündig eingesetzt werden. Der andere und radial äußere Ringteil (56) ragt in den besagten Spalt. Der axiale Vorsprung (16) bzw. der axiale Überstand (58) kann an der zum Anschlag (12) weisenden Stirnseite des Messrings angeordnet sein. Der Vorsprung (16) bzw. Überstand (58) kann dabei an dem relativ ortsfesten Ringteil, z.B. dem gezeigten inneren Ringteil (55) durch axialen Versatz und/oder axiale Überlänge ausgebildet sein.

Bei der dritten Variante ist der Verformungsweg des Messrings (54) und insbesondere des verdünnten Ringteils (57) unter Einwirkung der Zugkraft (F) begrenzt. Der Verformungsweg entspricht der axialen Länge des Vorsprungs (16) bzw. axialen Überstands (58). Am Ende des Verformungswegs kommt das im Spalt befindliche Ringteil, hier z.B. das radial äußere Ringteil (56), an beiden Stirnseiten in Anlage zwischen dem Anschlag (12) und dem Gegenanschlag (27) und verhindert eine weitere Verformung des Messrings (54).

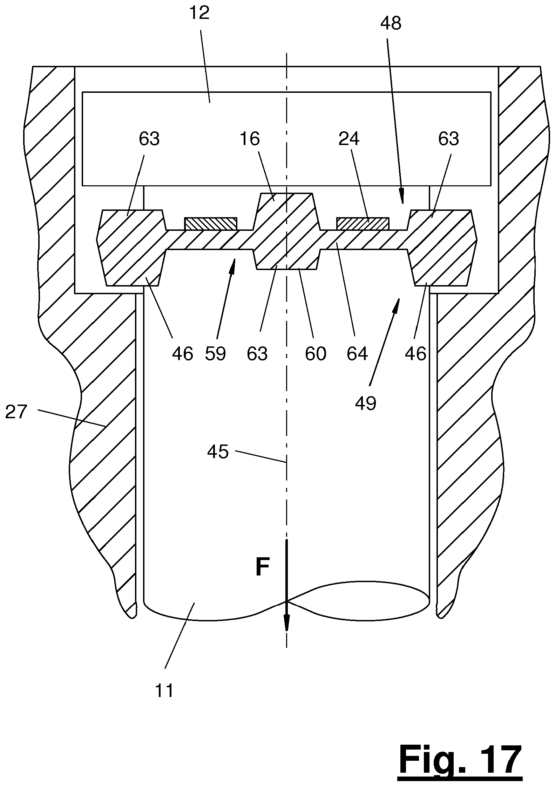

Figur 17 bis 19 zeigen eine vierte Variante der Erfassungseinrichtung (2), der kraftmessenden Sensorik (23) und des Messrings (59). Der Messring (59) weist an beiden axialen Stirnseiten mehrere nach außen gerichtete axiale Vorsprünge (16,46) sowie dazwischen angeordnete und in Umfangsrichtung sich erstreckende verdünnte Ringteile (64) mit einem Sensor (24) auf. Die entgegengesetzt gerichteten Vorsprünge (16,46) sind in Umfangsrichtung zueinander versetzt angeordnet. Ferner sind an beiden Stirnseiten des Messrings (59) zwischen den axialen Vorsprüngen (16,46) jeweils ein Anschlagelement (63) angeordnet, welches weniger weit axial vorspringt als die jeweils benachbarten Vorsprünge (16,46). Die in Umfangsrichtung sich erstreckenden verdünnten Ringteile (64) sind zwischen den Anschlagelementen (63) und den jeweiligen benachbarten axialen Vorsprüngen (16,46) angeordnet. Die bevorzugt mehreren Sensoren (24) sind einseitig oder beidseitig an vorzugsweise mehreren verdünnten Ringteilen (64) angeordnet.

Wie Figur 17 bis 19 verdeutlichen, sind an den gegenüberliegenden Stirnseiten des Messrings (59) die axialen Vorsprünge (16,46) an der einen Stirnseite und die Anschlagelemente (63) an der anderen Stirnseite jeweils in Axialrichtung (45) fluchtend bzw. einander gegenüberliegend angeordnet.

Wie Figur 17 verdeutlicht, kommt unter der Zugkraft (F) der Anschlag (12) an der Zugstange (11) in Anlage an den axialen Vorsprüngen (16) an der einen Stirnseite des Messrings (59), wobei die axialen Vorsprünge (46) an der anderen Stirnseite in Anlage zum fahrzeugfesten Gegenanschlag (27), z.B. der Zugstangenlagerung, kommen. Durch die in Umfangsrichtung verteilte stirnseitige Anordnung der axialen Vorsprünge (16,46) werden die in Umfangsrichtung sich erstreckenden verdünnten Ringteile (64) unter Biegebelastung verformt, wobei diese Biegeverformung mit den ein oder mehreren Sensoren (24) in der vorbeschriebenen Weise aufgenommen und verarbeitet wird. Der Verformungsweg wird durch den axialen Längenunterschied zwischen den jeweiligen axialen Vorsprüngen (16,46) und den zugehörigen Anschlagelementen (63) auf der gleichen Stirnseite begrenzt.

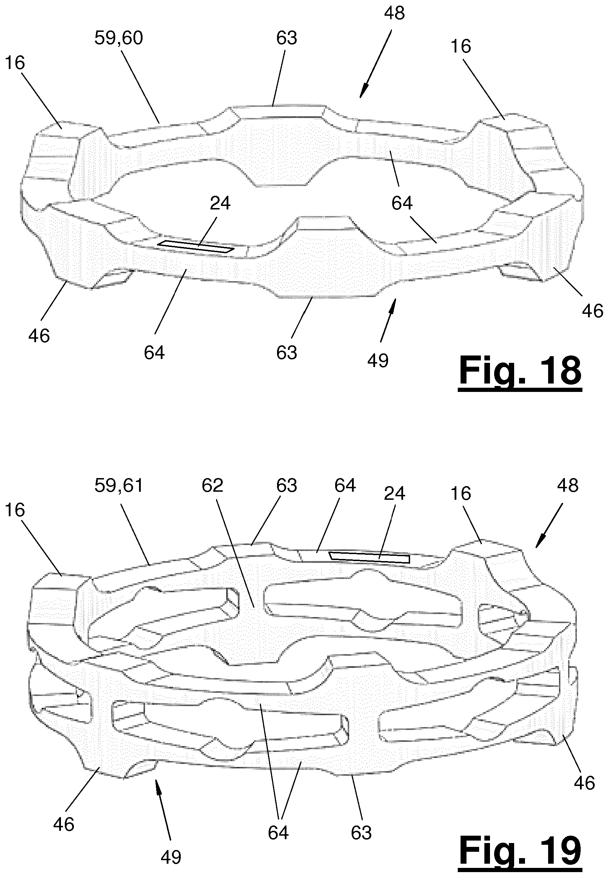

Der Messring (59) kann gemäß Figur 18 als Einzelring (60) oder gemäß Figur 19 als Mehrfachring (61), insbesondere Doppelring, ausgebildet sein. In Figur 17 ist die Ausbildung als Einzelring (60) dargestellt und vorstehend beschrieben.

Beim Doppelring (61) von Figur 19 sind zwei axial distanzierte Ringabschnitte vorhanden, die mit mehreren in Umfangsrichtung verteilt angeordneten axialen Verbindungsstegen (62) gegenseitig verbunden sind. Die Zahl der Ringabschnitte kann auch größer als zwei sein. Der Messring (59) kann insofern als Mehrfachring mit einer beliebigen Zahl der besagten Ringabschnitte ausgebildet sein.

Die Ringabschnitte haben an jeweils einer Stirnseite des Messrings (59) die vorbeschriebene Ausbildung mit mehreren in Umfangsrichtung abwechselnd angeordneten axialen Vorsprüngen (16,46) und dazwischen angeordneten Anschlagelementen (63). Die Ringabschnitte und deren axiale Vorsprünge (16,46) und Anschlagelemente (63) sind in Umfangsrichtung gegeneinander versetzt angeordnet. Hierbei sind die Verbindungsstege (62) jeweils zwischen einem Vorsprung (16,46) an der einen Stirnseite und einem Anschlagelement (63) an der anderen Stirnseite angeordnet.

An den Ringabschnitten sind ebenfalls die vorbeschriebenen verdünnten Ringteile (64) mit Erstreckung in Umfangsrichtung angeordnet. Durch den besagten umfangseitigen Versatz sind die verdünnten Ringteile (64) in Axialrichtung (45) jeweils einander gegenüberliegend und dabei mittels der Verbindungsstege (62) distanziert angeordnet. Die verdünnten Ringteile (64) können außerdem am mittleren Bereich eine lokale Wandschwächung, z.B. eine radiale Nut, aufweisen.

In Figur 20 ist eine fünfte Variante der Erfassungseinrichtung (2) mit einem Messring (65) dargestellt, der als Federanordnung (66) aus mehreren schräg gegeneinander angestellten Scheiben- oder Tellerfedern (67,68) ausgebildet ist. An mindestens einer Scheiben- oder Tellerfeder (67,68) ist mindestens ein Sensor (24) angeordnet. Dies kann ein kraftaufnehmender Sensor der vorbeschriebenen Art sein. Zwischen den schräg gegeneinander angestellten Scheiben- oder Tellerfedern (67,68) kann ein Anschlagelement (69) angeordnet sein, welches z.B. als Stützring ausgebildet ist.

Die Scheiben- oder Tellerfedern (67,68) können in der gezeigten Ausführungsform als Einzelfedern ausgebildet sein. Alternativ können mehrere gleich gerichtete Scheiben- oder Tellerfedern (67,68) mit gegenseitigem Kontakt hintereinander angeordnet sein.

Die Scheiben- oder Tellerfedern (67,68) haben eine konische Form. Sie sind z.B. derart auf der Zugstange (11) angeordnet, dass sie mit ihren jeweiligen inneren Rändern zusammenstoßen und mit ihren äußeren Rändern in Axialrichtung (45) voneinander distanziert sind. Das Anschlagelement (69) kann sich an diesem distanzierten Bereich befinden. Es begrenzt die Federverformung. Ein oder mehrere Sensoren (24) sind z.B. an der zum Anschlagelement (69) weisenden Innenseite der einen Teller- oder Scheibenfeder (67) angeordnet.

Die äußeren und Axialrichtung voneinander distanzierten Ränder der Scheiben- oder Tellerfedern (67,68) bilden jeweils einen axialen Vorsprung (16,46) und kommen unter Einwirkung der Zugkraft (F) in Anlage mit dem Anschlag (12) und dem fahrzeugfesten Gegenanschlag (27), wobei die gegenseitig am jeweiligen inneren Rand abgestützen Scheiben- oder Tellerfedern (67,68) verformt werden und diese Biegeverformung von den ein oder mehreren Sensoren (24) in der vorbeschriebenen Weise aufgenommen und verarbeitet wird.

Bei den vorbeschriebenen zweiten bis fünften Varianten haben die Messringe (50,54,59,65) durch die einseitigen oder beiseitigen axialen Vorsprünge (16,46) ebenfalls an einer oder beiden Stirnseiten eine axial profilierte Ausbildung (48,49). Hierdurch können die vorbeschriebenen Stauchverformungen oder Biegeverformungen an einem verdünnten Ringteil (53,57,64) oder an einer Scheiben- oder Tellerfeder (67,68) erzielt und mittels ein oder mehreren Sensoren (24) erfasst werden. Die Sensoren (24) können in den verschiedenen Varianten jeweils mehrfach und mit einer bevorzugt gleichmäßigen Verteilung in Umfangsrichtung angeordnet sein.

In einer anderen Ausführungsform können druckmessende Sensoren alternativ oder zusätzlich am Messring (15), insbesondere an einer oder beiden Stirnseiten, angebracht sein. Ferner kann ein Sensor (24) auch als magnetorestriktiver Aufnehmer ausgebildet und an geeigneter Stelle des Messrings (15) angeordnet sein.

Die ein oder mehreren Sensoren (24) sind über eine Leitung oder auf andere geeigneter Weise mit der Signalisierungseinrichtung (31) verbunden. Die Sensorik (22) für die Aufnahme der axialen Beschleunigung kann ihrerseits mit der gleichen oder einer anderen Signalisierungseinrichtung (31) verbunden sein.

Figur 1 und 2 zeigen die Erfassungseinrichtung (2) und eine Stabilisierungseinrichtung (3). In beiden Ausführungsformen sind die Stabilisierungseinrichtung (3) und ihre nachfolgend erläuterten Komponenten am Fahrzeuganhänger (1) angeordnet. In einer anderen, nicht dargestellten Ausführungsform können zumindest Teile der Stabilisierungseinrichtung (3) in einem Zugfahrzeug (39) angeordnet sein.

Die Stabilisierungseinrichtung (3) weist eine nachfolgend erläuterte Sensorik (22) zur Erfassung von kritischen Fahrzuständen des Fahrzeuganhängers (1) auf. Die Stabilisierungseinrichtung (3) beeinhaltet ferner eine Steuerung (28) und einen hiervon beaufschlagten Bremsaktuator (21). Dieser dient zur Restabilisierung des erfassten kritischen Fahrzustands.

Der Bremsaktuator (21) betätigt bei einem kritischen Fahrzustand eine oder mehrere Radbremsen (17), wobei durch die Bremswirkung der kritische Fahrzustand bekämpft bzw. beseitigt und restabilisiert wird. Eine Schlingerbewegung des Fahrzeuganhängers (1) wird z.B. durch die besagte Bremswirkung gedämpft und beseitigt.

Unter einem stabilen Fahrzustand wird ein Bewegungsverhalten des gezogenen Fahrzeuganhängers (1) verstanden, das im Wesentlichen durch die Bewegung des Zugfahrzeugs (39) vorgegeben ist bzw. dieser Bewegung folgt und bei dem die Räder (14) des Fahrzeuganhängers (1) im ständigen Kontakt mit der Fahrbahn bleiben.

Unter einem kritischen bzw. instabilen Fahrzustand eines Fahrzeuganhängers wird ein Bewegungsverhalten des Fahrzeuganhängers (1) verstanden, das wesentlich von der Bewegung des Zugfahrzeugs (39) abweicht bzw. dieser Bewegung nicht oder in vermindertem Umfang nachfolgt, wobei kritische Fahrzustände insbesondere umfassen: eine Rotation oder Schwingung des Fahrzeuganhängers um die Hochachse, die Querachse oder die Längsachse (Gieren, Schlingern, Schleudern, Nicken oder Wanken), das Abheben mindestens eines Anhängerrades (14) von der Fahrbahn und/oder translatorische Schwingungen in Längs- oder Querrichtung des Fahrzeuganhängers (1).

Die Stabilisierungseinrichtung (3), insbesondere deren Bremsaktuator (21), kann an beliebig geeigneter Stelle des Fahrzeuganhängers (1) angeordnet sein. Vorzugsweise befindet sie sich an einer Achse (9) und ist hier über eine Halterung (42) befestigt. Diese kann auch gemäß Figur 3 für die Abstützung der Mäntel (19") dienen. Der Bremsaktuator (21) ist z.B. in Fahrt- oder Zugrichtung hinter der Achse (9) angeordnet. Der Bremsaktuator (21) kann zusammen mit der Steuerung (28) in einer Baugruppe integriert sein. Er kann alternativ getrennt von der Steuerung (28) angeordnet sein.

Der Bremsaktuator (21) kann in beliebig geeigneter Weise ausgebildet sein und wirkt auf die Radbremsen (17) in ebenfalls beliebig geeigneter Weise ein.

Im gezeigten Ausführungsbeispiel von Figur 1 und 3 weist der Bremsaktuator (21) einen steuerbaren Antrieb, z.B. einen Elektromotor oder einen fluidischen Zylinder, mit einem Stellmittel (43), z.B. einer Schubstange auf, das von hinten gegen den Waagbalken (40) drückt und dabei die dort eingehängten Seile (19') der Bremszüge (19) betätigt und anzieht. Die Seile (19') werden dabei gegenüber den relativ ortsfesten Mäntel (19") ausgezogen, die z.B. an einer achsfesten Halterung (42) abgestützt sind.

Figur 4 zeigt eine kinematisch ungekehrte Anordnung für die Relativbewegung der Seile (19') und Mäntel (19") bei der Bremszubetätigung durch die Stabilisierungseinrichtung (3). Hierbei werden die Mäntel (19") relativ zu den eingehängten und gehaltenen Seilen (19') bewegt und zum Spannen des jeweiligen Bremszugs (19) zu der Radbremse (17) hin bewegt. Die Mäntel (19") können z.B. an einem Mantelhalter (42') angeordnet, insbesondere befestigt sein. Dieser kann rückseitig an der stationären, insbesondere achsfesten, Halterung (42) abgestützt und in Richtung der Längsachse beweglich angeordnet und ggf. gelagert sein.

Der Bremsaktuator (21) zieht bei der Bremsbetätigung z.B. mit dem Stellmittel (43) den Mantelhalter (42') und die Mäntel (19") in Pfeilrichtung an und strafft bzw. spannt dadurch den jeweiligen Bremszug (19). Bei Betätigung der anderen Bremseinrichtungen (6,7) und Auszug der Seile (19') sind der Mantelhalter (42') und die Mäntel (19") relativ ortsfest bzw. achsfest an der Halterung (42) entgegen der erwähnten Pfeilrichtung abgestützt.

Das Einwirken des Bremsaktuators (21) erfolgt gesteuert oder geregelt und in Abhängigkeit von den mittels einer Sensorik (22) detektierten kritischen Fahrzuständen, z.B. Schlingerbewegungen. Bei Abklingen oder Beendigung der Schlingererscheinungen kann der Bremsaktuator (21) reduziert oder deaktiviert werden, wobei die Federn in den Radbremsen (17) die Bremszüge (19) und ggf. den Waagbalken (40) in die Ausgangsstellung bewegen.

Die Stabilisierungseinrichtung (3) kann unabhängig von der Betriebsbremse (6) agieren. Die Stabilisierungs-Bremsaktionen können der normalen Betriebsbremse (6) überlagert werden, ohne dass diese dabei betätigt wird. Im gezeigten Ausführungsbeispiel von Figur 3 kann z.B. der Waagbalken (40) bei Aktivierung der Stabilisierungseinrichtung (3) auf der Bremsübertragungseinrichtung (18) entlang geschoben werden. Bei der kinematischen Variante von Figur 4 werden die Mäntel (19") an den eingehängten Seilen (19') entlang geschoben, wobei die Bremsübertragungseinrichtung (18) nicht bewegt wird.

Die Stabilisierungseinrichtung (3) ist mit einer Energieversorgung (30), insbesondere Stromversorgung, des Fahrzeuganhängers (1) verbunden. Die Energie kann in Fahrt vom Zugfahrzeug (39) über das Stromkabel oder im Stand über eine externe Leitung zugeführt werden. Ferner kann ein Energiespeicher, insbesondere eine Batterie oder ein Akku vorhanden sein. Die Energieversorgung (30) kann auch eine Fluidversorgung, z.B. mit Hydrauliköl, für den Betrieb eines fluidischen, insbesondere hydraulischen, Bremsaktuators (21) beinhalten.

Die Stabilisierungseinrichtung (3) weist die besagte Sensorik (22) zur Erfassung von kritischen Fahrzuständen des Fahrzeuganhängers (1) auf. Diese kann auch für die Erfassungseinrichtung (2) benutzt werden. Die Sensorik (22) misst zumindest die Beschleunigung in Längsrichtung (45). Die Sensorik (22) kann ferner einen oder mehrere andere Sensoren, z.B. ESP-Sensoren, Gierratensensoren, Beschleunigungsaufnehmer in anderen Richtungen oder dgl. aufweisen. Der oder die Sensoren sind an geeigneter Stelle des Fahrzeuganhängers (1) angeordnet, z.B. am Gehäuse des Bremsaktuators (21) und/oder an einer anderen entfernten Stelle am Fahrgestell (4). Die Sensorik (22) ist vorzugsweise in das Gehäuse des Bremsaktuators (21) integriert. Sie kann z.B. an dessen Antrieb angeordnet sein.

Die Stabilisierungseinrichtung (3) kann die vorbeschriebene Erfassungseinrichtung (2) für die aktuelle Masse bzw. das Gewicht des Fahrzeuganhängers (1) beinhalten und mit dieser kombiniert werden.

Die Erfassungseinrichtung (2) kann dabei die Masse bzw. das Gewicht des Fahrzeuganhängers (1) bei Fahrbeginn und/oder beim weiteren Fahrbetrieb erfassen, so dass die erfassten Werte von Masse bzw. Gewicht bereits vor einer im Fahrbetrieb erstmaligen Betätigung bzw. Aktivierung der Stabilisierungseinrichtung (3) vorliegen und für deren Funktion und/oder ggf. für andere Zwecke verwendet werden können. Die Massen- bzw. Gewichtserfassung kann kontinuierlich oder intermittierend geschehen.

In der gezeigten Ausführungsform sind die Stabilisierungseinrichtung (3) und ihre nachfolgend erläuterten Komponenten am Fahrzeuganhänger (1) angeordnet. In einer anderen, nicht dargestellten Ausführungsform können zumindest Teile der Stabilisierungseinrichtung (3) in einem Zugfahrzeug (39) angeordnet sein.

Die Erfassungseinrichtung (2) ist mit der Steuerung (28) verbunden. Die Steuerung (28) kann dadurch den Bremsaktuator (21) in Abhängigkeit von der erfassten Masse bzw. des Gewichts des Fahrzeuganhängers (1) steuern. Dieses Steuern kann auch ein Regeln beinhalten, bis der stabile Fahrzustand wieder hergestellt ist.

Die Steuerung bzw. Regelung des Bremsaktuators (21) in Abhängigkeit von der erfassten Masse bzw. des Gewichts kann in unterschiedlicher Weise erfolgen.

Die Steuerung (28) kann zum einen das Ansprechverhalten des Bremsaktuators (21) in Abhängigkeit von der erfassten Masse adaptieren. Hierbei können z.B. ein oder mehrere Auslöse-Grenzwerte für das Auslösen eines Bremseingriffs verändert werden. Die Auslöse-Grenzwerte orientieren sich an den von der Sensorik (22) detektierten Parameterwerten, die den Fahrzustand repräsentieren. Für die Parameter, z.B. für die Gierrate und die hierüber erfasste Amplitude und/oder Frequenz von Schlinger- oder Schleuderbewegungen, kann ein Auslöse-Grenzwert vorgegeben sein, der den Übergang in einen kritischen bzw. instabilen Fahrzustand definiert. Entsprechende Auslöse-Grenzwerte kann es für Wankbewegungen um die Längsachse (45), Beschleunigungen oder andere Bewegungsparameter geben.

Die Auslöse-Grenzwerte können als Absolutwerte oder als Relativänderungen oder in anderer Weise definiert werden. Die Definition des oder der vorgegebenen Auslöse-Grenzwerte kann massen- oder gewichtsabhängig sein. Beispielsweise kann ein Auslöse-Grenzwert umso niedriger bestimmt werden, je höher die erfasste Masse bzw. das Gewicht ist.

Alternativ oder zusätzlich kann die Steuerung (28) in Abhängigkeit von der erfassten Masse die Intensität eines Bremseingriffs des Bremsaktuators (21) verändern. Hierbei kann z.B. ein Kraftbeschränkungs-Grenzwert für die Begrenzung des Bremseingriffs vorgesehen oder adaptiert werden. Die an den Radbremsen (17) wirksame Bremskraft kann dadurch an die erfasste Masse bzw. das Gewicht angepasst werden. Dies kann bereits beim erstmaligen Bremseingriff im Fahrbetrieb erfolgen. Hierdurch kann ein Überbremsen und eine weitere Destabilisierung des Fahrzeuganhängers (1) von Anfang an vermieden werden.

Bei einer niedrigen erfassten Masse bzw. Gewicht kann die anfängliche Bremskraft an den Radbremsen (17) auf einen niedrigen Wert gesteuert werden, so dass der Bremsaktuator (21) nicht mit der maximal möglichen Kraft zu bremsen beginnt. Andererseits kann auch im weiteren Bremsverlauf eine obere maximale Bremskraft vorgegeben werden. In diesem Kraftfenster kann der Bremsaktuator (21) zwar die anfängliche Bremskraft erhöhen, falls der kritische Fahrzustand nicht oder nicht schnell genug reduziert oder beseitigt werden kann. Ein Überschreiten der massenabhängigen Maximalkraftgrenze nach oben wird jedoch zuverlässig vermieden. Mit den vorgegebenen Kraft-Grenzwerten kann auch die Lage und Größe des zur Stabilisierung verfügbaren Kraftfensters definiert werden.

Bei hohen erfassten Massen bzw. Gewichten, wie sie z.B. bei voll beladenen Nutzanhängern vorkommen, kann ein Kraft-Grenzwert hoch angesetzt werden oder kann ggf. auch entfallen. Bei Nutzanhängern mit sehr großen Unterschieden zwischen Leergewicht und zulässigem Gesamtgewicht kann die Kraftbegrenzung besondere Bedeutung haben, weil die auf das hohe Maximalgewicht ausgelegte maximale Bremskraft für ein leeren Nutzanhänger zu hoch wäre und zu einem Überbremsen sowie einer Verschlechterung des kritischen Fahrzustands führen würde.

Ferner kann die Steuerung (28) in Abhängigkeit von der erfassten Masse die Dynamik eines Bremseingriffs des Bremsaktuators (21) beschränken. Hierfür kann ein Dynamikbeschränkungs-Grenzwert vorgesehen oder adaptiert werden. Die Dynamik kann z.B. die Zunahme der vom Bremsaktuator (21) aufgebauten Bremskraft an der oder den Radbremsen (17) betreffen. Die Dynamik kann alternativ oder zusätzlich die Steigerung oder Reduzierung der Bremskraft im Regelungsbetrrieb der Steuerung (28) und in Reaktion auf die Höhe und ggf. Veränderung der mit der Sensorik (22) detektierten Parameterwerte betreffen.

Die Erfassungseinrichtung (2) kann eine zusätzlich andere lasterfassende Sensorik am Fahrzeuganhänger (1) aufweisen, die z.B. am Stützrad (20), an der Radlagerung, an der Achslagerung und/oder an anderer Stelle angeordnet ist.

Die Verarbeitungseinrichtung (29) kann separat oder bevorzugt in der Steuerung (28) angeordnet sein. Über die Signaleinrichtung (31) werden die Sensorsignale oder die Verarbeitungssignale kommuniziert. Die Kommunikation kann dabei jeweils mit der Steuerung (28) erfolgen, die den Bremsaktuator (21) steuert oder regelt.

Die Stabilisierungseinrichtung (3), insbesondere die Erfassungseinrichtung (2) und/oder die Steuerung (28), ist mit einer besagten Anzeige (32,33) verbindbar bzw. verbunden. Eine Anzeige (32) kann am Fahrzeug (1), insbesondere an einer einsehbaren Stelle am Fahrgestell und/oder am Aufbau (38) angeordnet sein. Eine alternative oder zusätzliche fahrzeugexterne Anzeige (33) kann außerhalb des Fahrzeuganhängers (1) angeordnet sein. Eine solche fahrzeugexterne Anzeige (33) kann z.B. mobil oder stationär angeordnet sein. Eine mobile Anzeige (33) kann an einem beweglichen Anzeigegerät (34), z.B. einem Smartphone, Tablet oder dgl., ausgebildet sein. Sie kann mittels einer App realisiert und betrieben werden. In einer alternativen oder zusätzlichen Ausführung kann eine fahrzeugexterne Anzeige (33) an oder in einem Zugfahrzeug (39) realisiert werden, z.B. an der Instrumententafel.

Die Anzeigen (32,33) können optisch und/oder akustisch oder in anderer Weise funktionieren. Sie können einen Monitor oder ein anderes optisches Anzeigemittel beinhalten. Eine akustische Anzeige ist über einen Lautsprecher oder dergleichen möglich. Beim Anzeigegerät (34) und bei einem Zugfahrzeug (39) können vorhandene Anzeigemittel mit einer entsprechenden Ansteuerung benutzt werden.

Die Kommunikation zwischen der Stabilisierungseinrichtung (3) und der oder den Anzeigen (32,33) erfolgt mittels einer bevorzugt drahtlosen Kommunikationseinrichtung (35), die je nach Anzeige auch alternativ oder zusätzlich drahtgebunden funktionieren kann. Hierfür weisen die Anzeige(n) (32,33) eine Kommunikationseinheit (37), z.B. einen Empfänger, und die Erfassungseinrichtung (2) und/oder die Steuerung (28) eine Kommunikationseinheit (36) auf.

An einer Anzeige (32,33) können verschiedene Informationen mitgeteilt werden. Dies kann z.B. eine Angabe über das von der Erfassungseinrichtung (2) ermittelte tatsächliche und aktuelle Fahrzeuggewicht sein. Eine andere Information kann die von der Sensorik (27) ermittelte Aufliegelast an der Anhängerkupplung (5) betreffen. Weitere Informationen können sich auf die Schwerpunktslage, eventuelle ungleichmäßige Belastungen der Fahrzeugräder (4) und/oder der Achsen (9) beziehen.

Die Stabilisierungseinrichtung (3) kann außerdem mit ein oder mehreren weiteren und in Figur 1 angedeuteten Sensoren verbunden sein, die andere Zustände von Komponenten des Fahrzeuganhängers (1) und/oder seiner Umgebung erfassen. Dies können z.B. Sensoren zur Detektion des Reifendrucks, des Bremsbelagverschleißes, der Bremsentemperatur, der Einraststellung der Anhängerkupplung (5), der Parkstützen oder dgl. sein. Ferner kann der Einzug des Stützrades (20) oder die Einstecklage von Unterlegkeilen oder dgl. sensorisch erfasst werden. Ein Umgebungssensor kann z.B. ein Parksensor am Fahrzeugheck und/oder an den Fahrzeugseiten oder eine Rückfahrkamera oder dgl. sein.

Die Erfassungseinrichtung (2) kann auch für eine elektrische Betriebsbremse und deren Ansteuerung sowie für ein Fahrzeug ohne Stabilisierungseinrichtung, insbesondere Schlingerbremseinrichtung, benutzt werden.

### BEZUGSZEICHENLISTE

- 1: Fahrzeug, Fahrzeuganhänger
- 2: Erfassungseinrichtung
- 3: Stabilisierungseinrichtung, Schlingerbremseinrichtung
- 4: Fahrgestell
- 5: Anhängerkupplung
- 6: Bremseinrichtung, Betriebsbremse, Auflaufbremse
- 7: Bremseinrichtung, Handbremseinrichtung
- 8: Deichsel
- 9: Achse
- 10: Auflaufeinrichtung
- 11: Zugstange
- 12: Anschlag
- 13: Radlenker
- 14: Rad, Fahrzeugrad
- 15: Messring
- 15': Korpus, Ringkorpus
- 16: Vorsprung, Wölbung
- 16': Übergangsstelle
- 16": Anlagefläche
- 17: Radbremse
- 18: Bremsübertragungseinrichtung, Bremsgestänge
- 19: Bremszug, Bowdenzug
- 19': Seil
- 19": Mantel, Hülle
- 20: Stützrad
- 21: Bremsaktuator, Bremseinheit
- 22: Sensorik, Schlingersensorik
- 23: Sensorik, Krafterfassung an Auflaufeinrichtung
- 24: Sensor, Dehnmessstreifen
- 25: Anlaufscheibe
- 26: Anlaufscheibe
- 27: Gegenanschlag, Lagerung
- 28: Steuerung
- 29: Verarbeitungseinrichtung
- 30: Energieversorgung
- 31: Signaleinrichtung
- 32: Anzeige anhängerseitig
- 33: Anzeige fahrzeugextern, instationär
- 34: Anzeigegerät, Smartphone, Tablet
- 35: Kommunikationseinrichtung drahtlos
- 36: Kommunikationseinheit an Stabilisierungseinrichtung
- 37: Kommunikationseinheit an Anzeigegerät
- 38: Aufbau
- 39: Zugfahrzeug
- 40: Ausgleichselement, Waagbalken
- 41: Mitnehmer
- 42: Halterung
- 42': Mantelhalter
- 43: Stellmittel, Schubstange
- 44: Energiespeicher
- 45: Längsachse
- 46: Vorsprung
- 47: Ausnehmung
- 48: axial profilierte Ausbildung
- 49: axial profilierte Ausbildung
- 50: Messring
- 51: Ringteil
- 52: Ringteil
- 53: Ringteil verdünnt, Steg axial
- 54: Messring
- 55: Ringteil
- 56: Ringteil
- 57: Ringteil verdünnt, Steg radial
- 58: Überstand
- 59: Messring
- 60: Einzelring
- 61: Doppelring
- 62: Verbindungssteg
- 63: Anschlagelement
- 64: Ringteil verdünnt, Steg umfangseitig
- 65: Messring
- 66: Federanordnung, Federpaket
- 67: Scheibenfeder, Tellerfeder
- 68: Scheibenfeder, Tellerfeder
- 69: Anschlagelement, Stützring

- F: Zugkraft

## Patentansprüche

1. Erfassungseinrichtung für die Masse eines Fahrzeuganhängers (1), der eine Anhängerkupplung (5) und eine Auflaufeinrichtung (10) aufweist, wobei die Erfassungseinrichtung (2) eine Sensorik (23) zur Messung der am Fahrzeuganhänger (1) in Längsrichtung (45) wirkenden Zugkraft (F) und eine Sensorik (22) zur Erfassung der am Fahrzeuganhänger (1) in Längsrichtung (45) wirkenden Beschleunigung sowie eine Verarbeitungseinrichtung (29) aufweist, die zur Anordnung am Fahrzeuganhänger (1) vorgesehen und ausgebildet sind, wobei die kraftmessende Sensorik (23) zur Anordnung an der Auflaufeinrichtung (10) vorgesehen und ausgebildet ist und die Verarbeitungseinrichtung (29) aus den Signalen der Sensoriken (22,23) die Masse des Fahrzeuganhängers (1) ermittelt, **dadurch gekennzeichnet, dass** die kraftmessende Sensorik (23) einen Messring (15) mit einem oder mehreren Sensoren (24) aufweist, der zur Anordnung auf einer Zugstange (11) der Auflaufeinrichtung (10) vorgesehen und ausgebildet ist.

2. Erfassungseinrichtung nach Anspruch 1, **dadurch gekennzeichnet, dass** die ein oder mehreren Sensoren (24) als kraftaufnehmende Sensoren, insbesondere als Dehnmessstreifen, bevorzugt als laserstrukturierte Dehnmessstreifen, oder als magnetorestriktive Aufnehmer oder als druckmessende Sensoren ausgebildet sind.

3. Erfassungseinrichtung nach einem der vorhergehenden Ansprüche, **dadurch gekennzeichnet, dass** der Messring (15) einen Korpus (15') mit einem oder mehreren axialen Vorsprüngen (16,46), insbesondere brückenartigen Wölbungen, aufweist, wobei an einer oder beiden Stirnseiten des Messrings (15) jeweils ein oder mehrere axiale Vorsprünge (16,46) angeordnet sind.

4. Erfassungseinrichtung nach Anspruch 3, **dadurch gekennzeichnet, dass** durch die Profilierung (48,49) an den Vorsprüngen (16,46) eingeleitete axiale Zugkräfte an einer in Umfangsrichtung versetzten Stelle des Korpus (15') auf der anderen Ringseite abgestützt werden.

5. Erfassungseinrichtung nach Anspruch 3 oder 4,
**dadurch gekennzeichnet, dass** ein Sensor (24) an einem axialen Vorsprung (16,46) des Messrings (15) angeordnet ist.

6. Erfassungseinrichtung nach einem der vorhergehenden Ansprüche, **dadurch gekennzeichnet, dass** der Messring (15) ein Anschlagelement (63,69) zur Begrenzung der Messringverformung aufweist.

7. Erfassungseinrichtung nach einem der vorhergehenden Ansprüche, **dadurch gekennzeichnet, dass** die kraftmessende Sensorik (23) eine oder mehrere Anlaufringscheiben (25,26) aufweist, die zur axialen Anlage am Messring (15) sowie zur Anordnung auf einer Zugstange (11) der Auflaufeinrichtung (10) vorgesehen und ausgebildet ist/sind.

8. Verfahren zum Erfassen der Masse eines Fahrzeuganhängers (1), der eine Anhängerkupplung (5) und eine Auflaufeinrichtung (10) aufweist, wobei mit einer am Fahrzeuganhänger (1) angeordneten Sensorik (23) die am Fahrzeuganhänger (1) in Längsrichtung (45) wirkende Zugkraft (F) gemessen und mit einer am Fahrzeuganhänger (1) angeordneten Sensorik (22) die am Fahrzeuganhänger (1) in Längsrichtung (45) wirkende Beschleunigung erfasst und die Messwerte mit einer Verarbeitungseinrichtung (29) verarbeitet werden, wobei die kraftmessende Sensorik (23) an der Auflaufeinrichtung (10) angeordnet ist und die Verarbeitungseinrichtung (29) aus den Signalen der Sensoriken (22,23) die Masse des Fahrzeuganhängers (1) ermittelt, **dadurch gekennzeichnet, dass** die Zugkraft (F) von einer kraftmessenden Sensorik (23) mittels eines auf einer Zugstange (11) der Auflaufeinrichtung (10) angeordneten Messrings (15) mit einem oder mehreren Sensoren (24) gemessen wird.

9. Verfahren nach Anspruch 8, **dadurch gekennzeichnet, dass** der mit einem oder mehreren lokalen Vorsprüngen (16,46) versehene Messring (15) beim Auftreten von Axialkräften, insbesondere Zugkräften, verformt wird, wobei diese Verformung mit dem oder den Sensor(en) (24), insbesondere mit Dehnungsmessstreifen oder durch magnetorestriktive Aufnehmer, detektiert und zur Kraftermittlung herangezogen wird.

10. Stabilisierungseinrichtung, insbesondere Schlingerbremseinrichtung, für einen Fahrzeuganhänger (1) mit einer Betriebsbremse (6), die eine Auflaufeinrichtung (10) aufweist, wobei die Stabilisierungseinrichtung (3) eine zumindest die in Längsrichtung (45) wirkenden Beschleunigung erfassende Sensorik (22) zur Detektion von kritischen Fahrzuständen, insbesondere Schlingererscheinungen, eine Steuerung (28) und einen hiervon beaufschlagten Bremsaktuator (21) zur Stabilisierung des erfassten kritischen Fahrzustands aufweist, wobei der Bremsaktuator (21) eine Radbremse (17) betätigt und die Betriebsbremse (6) des Fahrzeuganhängers (1) überlagert, wobei die Stabilisierungseinrichtung (3) eine mit der Steuerung (28) verbundene Erfassungseinrichtung (2) für die aktuelle Masse bzw. das Gewicht des Fahrzeuganhängers (1) aufweist, wobei die Steuerung (28) den Bremsaktuator (21) in Abhängigkeit vom erfassten kritischen Fahrzustand und von der erfassten Masse des Fahrzeuganhängers (1) steuert und wobei die Erfassungseinrichtung (2) nach mindestens einem der Ansprüche 1 bis 7 ausgebildet ist.

11. Stabilisierungseinrichtung nach Anspruch 10, **dadurch gekennzeichnet, dass** die Steuerung (28) das Ansprechverhalten des Bremsaktuators (21) in Abhängigkeit von der erfassten Masse adaptiert, insbesondere einen oder mehrere Auslöse-Grenzwerte für das Auslösen eines ggf. überlagerten Bremseingriffs zu verändert.

12. Stabilisierungseinrichtung nach Anspruch 10 oder 11, **dadurch gekennzeichnet, dass** die Steuerung (28) in Abhängigkeit von der erfassten Masse die Intensität eines Bremseingriffs des Bremsaktuators (21) verändert, insbesondere einen Kraftbeschränkungs-Grenzwert für die Begrenzung des Bremseingriffs vorsieht oder adaptiert und/oder die Steuerung (28) in Abhängigkeit von der erfassten Masse die Dynamik eines Bremseingriffs des Bremsaktuators (21) beschränkt, insbesondere einen Dynamikbeschränkungs-Grenzwert vorsieht oder adaptiert.

13. Fahrzeuganhänger mit einer Anhängerkupplung (5) und einer Auflaufeinrichtung (10), wobei der Fahrzeuganhänger (1) eine Erfassungseinrichtung (2) für die Masse des Fahrzeuganhängers (1) aufweist, **dadurch gekennzeichnet, dass** die Erfassungseinrichtung (2) nach mindestens einem der Ansprüche 1 bis 7 ausgebildet ist.

14. Fahrzeuganhänger nach Anspruch 13, **dadurch gekennzeichnet, dass** der Messring (15) und ggf. die Anlaufringscheibe(n) (25,26) zwischen einem rückwärtigen Anschlag (12) an der Zugstange (11) und einem fahrzeugfesten Gegenanschlag (27), insbesondere einer Lagerung der Zugstange (11), angeordnet ist/sind.

15. Fahrzeuganhänger nach Anspruch 13 oder 14, **dadurch gekennzeichnet, dass** der Fahrzeuganhänger (1) ein Fahrgestell (4), eine Betriebsbremse (6) mit der Auflaufeinrichtung (10) sowie Fahrzeugräder (14) mit Radbremsen (17) sowie eine Stabilisierungseinrichtung (3) für die Erfassung und Stabilisierung von kritischen Fahrzuständen, insbesondere Schlingererscheinungen, aufweist, die nach mindestens einem der Ansprüche 10 bis 12 ausgebildet ist.

## Claims

1. Detection device for the mass of a vehicle trailer (1) which has a trailer coupling (5) and an inertia brake device (10), wherein the detection device (2) has a sensor arrangement (23) for measuring the tensile force (F) acting on the vehicle trailer (1) in a longitudinal direction (45) and a sensor arrangement (22) for detecting the acceleration acting on the vehicle trailer (1) in a longitudinal direction (45), and a processing device (29) which is provided and configured for being arranged on the vehicle trailer (1), wherein the force-measuring sensor arrangement (23) is provided and configured for being arranged on the inertia brake device (10), and the processing device (29) determines the mass of the vehicle trailer (1) from the signals of the sensor arrangements (22, 23), **characterized in that** the force-measuring sensor arrangement (23) has a measuring ring (15) with one or more sensors (24), which measuring ring (15) is provided and configured for being arranged on a drawbar (11) of the inertia brake device (10).

2. Detection device according to Claim 1, **characterized in that** the one or more sensors (24) are configured as force-recording sensors, in particular as strain gauges, preferably as laser-structured strain gauges, or as magnetostrictive pickups or as pressure-measuring sensors.

3. Detection device according to any one of the preceding claims, **characterized in that** the measuring ring (15) has a body (15') with one or more axial projections (16, 46), in particular bridge-like protuberances, wherein in each case one or more axial projections (16, 46) are arranged on one or both face sides of the measuring ring (15).

4. Detection device according to Claim 3, **characterized in that**, owing to the profiling (48, 49), axial tensile forces introduced at the projections (16, 46) are supported on the other ring side at a location on the body (15') that is offset in a circumferential direction.

5. Detection device according to Claim 3 or 4, **characterized in that** a sensor (24) is arranged on an axial projection (16, 46) of the measuring ring (15) .

6. Detection device according to any one of the preceding claims, **characterized in that** the measuring ring (15) has a stop element (63, 69) for limiting the deformation of the measuring ring.

7. Detection device according to any one of the preceding claims, **characterized in that** the force-measuring sensor arrangement (23) has one or more annular contact discs (25, 26) which is/are provided and configured for axially abutting against the measuring ring (15) and for being arranged on a drawbar (11) of the inertia brake device (10).

8. Method for detecting a mass of a vehicle trailer (1) which has a trailer coupling (5) and an inertia brake device (10), wherein, by means of a sensor arrangement (23) arranged on the vehicle trailer (1), the tensile force (F) acting on the vehicle trailer (1) in a longitudinal direction (45) is measured, and, by means of a sensor arrangement (22) arranged on the vehicle trailer (1), the acceleration acting on the vehicle trailer (1) in a longitudinal direction (45) is detected, and the measured values are processed by means of a processing device (29), wherein the force-measuring sensor arrangement (23) is arranged on the inertia brake device (10), and the processing device (29) determines the mass of the vehicle trailer (1) from the signals of the sensor arrangements (22, 23), **characterized in that** the tensile force (F) is measured by a force-measuring sensor arrangement (23) by means of a measuring ring (15) with one or more sensors (24), which measuring ring (15) is arranged on a drawbar (11) of the inertia brake device (10).

9. Method according to Claim 8, **characterized in that** the measuring ring (15) equipped with one or more local projections (16, 46) is deformed in the presence of axial forces, in particular tensile forces, wherein said deformation is detected by means of the one or more sensors (24), in particular by means of strain gauges or by means of magnetostrictive pickups, and is used for determination of force.

10. Stabilizing device, in particular anti-sway brake device, for a vehicle trailer (1) with a service brake (6) which has an inertia brake device (10), wherein the stabilizing device (3) has a sensor arrangement (22), which detects at least the acceleration acting in a longitudinal direction (45), for detecting critical driving states, in particular swaying phenomena, a controller (28), and a brake actuator (21) which is acted on by said controller and which serves for stabilizing the detected critical driving state, wherein the brake actuator (21) actuates a wheel brake (17) and is superposed on the service brake (6) of the vehicle trailer (1), wherein the stabilizing device (3) has a detection device (2), connected to the controller (28), for the present mass or the weight of the vehicle trailer (1), wherein the controller (28) controls the brake actuator (21) in a manner dependent on the detected critical driving state and on the detected mass of the vehicle trailer (1), and wherein the detection device (2) is configured according to at least one of Claims 1 to 7.

11. Stabilizing device according to Claim 10, **characterized in that** the controller (28) adapts the response behaviour of the brake actuator (21) in a manner dependent on the detected mass, in particular varies one or more triggering threshold values for the triggering of an optionally superposed braking intervention.

12. Stabilizing device according to Claim 10 or 11, **characterized in that** the controller (28) varies the intensity of a braking intervention of the brake actuator (21), in particular provides or adapts a force limitation threshold value for the limitation of the braking intervention, in a manner dependent on the detected mass, and/or the controller (28) limits the dynamics of a braking intervention of the brake actuator (21), in particular provides or adapts a dynamics limitation threshold value, in a manner dependent on the detected mass.

13. Vehicle trailer having a trailer coupling (5) and having an inertia brake device (10), wherein the vehicle trailer (1) has a detection device (2) for the mass of the vehicle trailer (1), **characterized in that** the detection device (2) is configured according to at least one of Claims 1 to 7.

14. Vehicle trailer according to Claim 13, **characterized in that** the measuring ring (15) and optionally the contact ring(s) (25, 26) is/are arranged between a rear stop (12) on the drawbar (11) and a fixedly vehicle-mounted counterpart stop (27), in particular a bearing of the drawbar (11).

15. Vehicle trailer according to Claim 13 or 14, **characterized in that** the vehicle trailer (1) has a chassis (4), a service brake (6) with the inertia brake device (10), and vehicle wheels (14) with wheel brakes (17), and also a stabilizing device (3) for detecting and stabilizing critical driving states, in particular swaying phenomena, which stabilizing device (3) is configured according to at least one of Claims 10 to 12.

## Revendications

1. Dispositif de détection de la masse d'une remorque de véhicule (1), laquelle possède un attelage de remorque (5) et un dispositif à inertie (10), le dispositif de détection (2) possédant un système capteur (23) destiné à mesurer la force de traction (F) agissant sur la remorque de véhicule (1) dans la direction longitudinale (45) et un système capteur (22) destiné à détecter l'accélération agissant sur la remorque de véhicule (1) dans la direction longitudinale (45) ainsi qu'un dispositif de traitement (29), qui sont conçus et configurés pour être disposés sur la remorque de véhicule (1), le système capteur (23) de mesure de force étant conçu et configuré pour être disposé au niveau du dispositif à inertie (10) et le dispositif de traitement (29) déterminant la masse de la remorque de véhicule (1) à partir des signaux des systèmes capteurs (22, 23), **caractérisé en ce que** le système capteur (23) de mesure de force possède un anneau de mesure (15), pourvu d'un ou de plusieurs capteurs (24), qui est conçu et configuré pour être disposé sur une barre de remorquage (11) du dispositif à inertie (10).

2. Dispositif de détection selon la revendication 1, **caractérisé en ce que** l'un ou les plusieurs capteurs (24) sont réalisés sous la forme de capteurs d'enregistrement de force, notamment sous la forme de jauges de contrainte, de préférence sous la forme de jauges de contrainte structurées par laser, ou sous la forme d'enregistreurs magnétorestrictifs ou sous la forme de capteurs de mesure de pression.

3. Dispositif de détection selon l'une des revendications précédentes, **caractérisé en ce que** l'anneau de mesure (15) possède un corps (15') avec une ou plusieurs parties saillantes (16, 46) axiales, notamment des bombements de type pont, une ou plusieurs parties saillantes (16, 46) axiales étant respectivement disposées à un ou aux deux côtés frontaux de l'anneau de mesure (15).

4. Dispositif de détection selon la revendication 3, **caractérisé en ce que** les forces axiales introduites par le profilage (48, 49) sur les parties saillantes (16, 46) au niveau d'un endroit du corps (15') décalé dans la direction circonférentielle sont soutenues de l'autre côté de l'anneau.

5. Dispositif de détection selon la revendication 3 ou 4, **caractérisé en ce qu'**un capteur (24) est disposé au niveau d'une partie saillante (16, 46) axiale de l'anneau de mesure (15).

6. Dispositif de détection selon l'une des revendications précédentes, **caractérisé en ce que** l'anneau de mesure (15) possède un élément de butée (63, 69) destiné à limiter la déformation de l'anneau de mesure.

7. Dispositif de détection selon l'une des revendications précédentes, **caractérisé en ce que** le système capteur (23) de mesure de force possède un ou plusieurs disques annulaires de butée (25, 26), lesquels sont conçus et configurés pour reposer axialement contre sur l'anneau de mesure (15) ainsi que pour être disposés sur une barre de remorquage (11) du dispositif à inertie (10) .

8. Procédé de détection de la masse d'une remorque de véhicule (1), laquelle possède un attelage de remorque (5) et un dispositif à inertie (10), la force de traction (F) agissant sur la remorque de véhicule (1) dans la direction longitudinale (45) étant mesurée par un système capteur (23) disposé sur la remorque de véhicule (1) et l'accélération agissant sur la remorque de véhicule (1) dans la direction longitudinale (45) étant détectée par un système capteur (22) disposé sur la remorque de véhicule (1) et les valeurs mesurées étant traitées par un dispositif de traitement (29), le système capteur (23) de mesure de force étant disposé au niveau du dispositif à inertie (10) et le dispositif de traitement (29) déterminant la masse de la remorque de véhicule (1) à partir des signaux des systèmes capteurs (22, 23), **caractérisé en ce que** la force de traction (F) est mesurée par un système capteur (23) de mesure de force au moyen d'un anneau de mesure (15), pourvu d'un ou de plusieurs capteurs (24), disposé sur une barre de remorquage (11) du dispositif à inertie (10).

9. Procédé selon la revendication 8, **caractérisé en ce que** l'anneau de mesure (15), pourvu d'une ou plusieurs parties saillantes (16, 46) locales, est déformé lorsque se produisent des forces axiales, notamment des forces de traction, cette déformation étant détectée avec le ou les capteurs (24), notamment avec des jauges de contrainte ou par des enregistreurs magnétorestrictifs, et étant utilisée pour la détermination de la force.

10. Dispositif de stabilisation, notamment dispositif de frein antiroulis, pour une remorque de véhicule (1) équipée d'un frein de service (6), laquelle possède un dispositif à inertie (10), le dispositif de stabilisation (3) possédant un système capteur (22) qui détecte au moins l'accélération agissant dans la direction longitudinale (45) pour la détection d'états de déplacement critiques, notamment l'apparition de roulis, une commande (28) et un actionneur de frein (21) commandé par celle-ci pour la stabilisation de l'état de déplacement critique détecté, l'actionneur de frein (21) actionnant un frein de roue (17) et superposant le frein de service (6) de la remorque de véhicule (1), le dispositif de stabilisation (3) possédant un dispositif de détection (2) de la masse ou du poids actuel de la remorque de véhicule (1), relié à la commande (28), la commande (28) commandant l'actionneur de frein (21) en fonction de l'état de déplacement critique détecté et de la masse détectée de la remorque de véhicule (1) et le dispositif de détection (2) étant configuré selon au moins l'une des revendications 1 à 7.

11. Dispositif de stabilisation selon la revendication 10, **caractérisé en ce que** la commande (28) adapte le comportement de réaction de l'actionneur de frein (21) en fonction de la masse détectée, notamment pour modifier une ou plusieurs valeurs limites de déclenchement pour le déclenchement d'une éventuelle intervention de freinage superposée.

12. Dispositif de stabilisation selon la revendication 10 ou 11, **caractérisé en ce que** la commande (28) modifie l'intensité d'une intervention de freinage de l'actionneur de frein (21) en fonction de la masse détectée, notamment prévoit ou adapte une valeur limite de restriction de force pour la limitation de l'intervention de freinage et/ou la commande (28) restreint la dynamique d'une intervention de freinage de l'actionneur de frein (21) en fonction de la masse détectée, notamment prévoit ou adapte une valeur limite de restriction de la dynamique.

13. Remorque de véhicule comprenant un attelage de remorque (5) et un dispositif à inertie (10), la remorque de véhicule (1) possédant un dispositif de détection (2) pour la masse de la remorque de véhicule (1), **caractérisée en ce que** le dispositif de détection (2) est configuré selon au moins l'une des revendications 1 à 7.

14. Remorque de véhicule selon la revendication 13, **caractérisée en ce que** l'anneau de mesure (15) et, le cas échéant, le ou les disques annulaires de butée (25, 26), et/sont disposés entre une butée côté arrière (12) sur la barre de remorquage (11) et une contre-butée (27) fixe sur le véhicule, notamment un logement de la barre de remorquage (11).

15. Remorque de véhicule selon la revendication 13 ou 14, **caractérisée en ce que** la remorque de véhicule (1) possède un châssis roulant (4), un frein de service (6) avec le dispositif à inertie (10) ainsi que des roues de véhicule (14) équipées de freins de roue (17) ainsi qu'un dispositif de stabilisation (3) pour la détection et la stabilisation d'états de déplacement critiques, notamment l'apparition de roulis, lequel est configuré selon au moins l'une des revendications 10 à 12.
